(19) Europäisches Patentamt
European Patent Office
Office européen des brevets

(11) EP 2 532 687 A2

(12) # EUROPEAN PATENT APPLICATION

(43) Date of publication:
**12.12.2012 Bulletin 2012/50**

(21) Application number: **11169600.1**

(22) Date of filing: **10.06.2011**

(51) Int Cl.:
***C08F 10/00*** *(2006.01)* ***C08F 4/6592*** *(2006.01)*
***C07F 17/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Borealis AG**
**1220 Vienna (AT)**

(72) Inventors:
- **Rieger, Bernhard**
  **89275 Elching (DE)**
- **Schöbel, Alexander**
  **80939 Munich (DE)**
- **Reichelt, Norbert**
  **4501 Neuhofen/Krems (AT)**

(74) Representative: **Campbell, Neil Boyd**
**Dehns**
**St Bride's House**
**10 Salisbury Square**
**London EC4Y 8JD (GB)**

(54) **Bridged Metallocene Catalysts**

(57) A catalyst comprising a complex of formula (I)

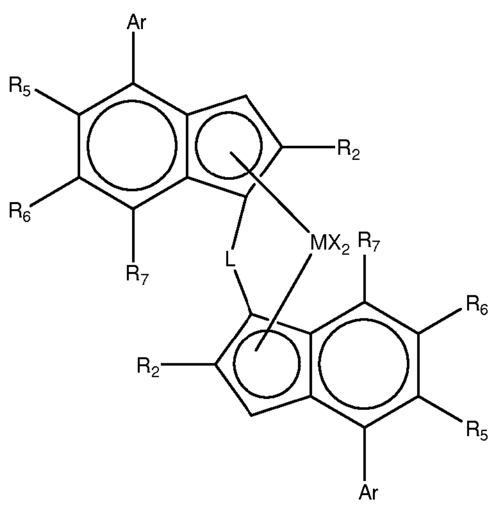

wherein
M is zirconium or hafnium;
each X is a sigma ligand;
L is a divalent bridge selected from -R'$_2$C-, -R'$_2$C-CR'$_2$-, -R'$_2$Si-, -R'$_2$Si-SiR'$_2$-, -R'$_2$Ge-, wherein each R' is independently a hydrogen atom, C1-C20-hydrocarbyl, tri(C1-C20-alkyl)silyl, C6-C20-aryl, C7-C20-arylalkyl or C7-C20-alkylaryl;
each $R_2$ is independently a C1-C20 hydrocarbyl radical optionally containing one or more heteroatoms from groups 14-16;
each $R_5$ is independently hydrogen or an aliphatic C1-20 hydrocarbyl group optionally containing one or more heteroatoms from groups 14-16;
each $R_6$ is independently hydrogen or an aliphatic C1-20 hydrocarbyl group optionally containing one or more heteroatoms from groups 14-16; or
an $R_5$ and $R_6$ group on adjacent carbon atoms can be taken together to form a 5 membered saturated carbon ring which is optionally substituted by a group $R_4$;
each $R_7$ is independently an aliphatic C1-20 hydrocarbyl group optionally containing one or more heteroatoms from groups 14-16 with at least 2 non-H atoms;
each Ar group is independently an aryl or heteroaryl group having up to 20 carbon atoms optionally substituted by one or more groups $R_1$;
each $R_1$ is a C1-20 hydrocarbyl group or two $R_1$ groups on adjacent carbon atoms taken together can form a fused 5 or 6 membered non aromatic ring with the Ar group, said ring being itself optionally substituted with one or more groups $R_4$;
each $R_4$ is a C1-20 hydrocarbyl group;
and (ii) a cocatalyst comprising a compound of a group 13 metal, e.g. boron.

EP 2 532 687 A2

## Description

This invention relates to new bisindenyl ligands, complexes thereof and catalysts comprising those complexes. In particular, the invention relates to racemic C2-symmetric metallocene catalysts containing such bisindenyl ligands, as well as the use of such new bisindenyl metallocene catalysts for the production of isotactic polypropylene with very high molecular weight, very high isotacticity and very high melting point even at industrially relevant polymerization temperatures.

Metallocene catalysts have been used to manufacture polyolefins for many years. Countless academic and patent publications describe the use of these catalysts in olefin polymerisation. Metallocenes are now used industrially and polyethylenes and polypropylenes in particular are often produced using cyclopentadienyl based catalyst systems with different substitution patterns.

The two most important physical properties of isotactic polypropylene (iPP) are its average molecular weight and its melting point (Tm), the latter being mostly determined by the degree of stereoregularity (isotacticity) of the polypropylene chains.

The Ziegler-Natta catalyst systems known in the literature can produce iPP with high molecular weights together with moderate to high isotacticities and melting points (Tm). The Tm (measured by standard DSC methods) of non-nucleated iPPs are in the range of 160 to 165˚C.

In the case of metallocenes, there are very few examples which can produce iPP having both very high molecular weights and high melting points. For example rac-Et(2,4,7-$Me_3$Ind)$_2$Zr$Cl_2$ can produce isotactic polypropylene with a molecular weight of 1,900,000 g/mol and a melting point of 168˚C.

In order to achieve such high values, a polymerization temperature of -30 ˚C is necessary. When the polymerization temperature is increased to 30 ˚C, the melting point of the resulting polypropylene decreases to 158 ˚C. A polymerization temperature of -30˚C is however far too low for polypropylene manufacturing in commercial plants, which need to be operated above 60˚C. When used at industrially useful polymerization temperatures, this same metallocene yields low molecular weight polypropylenes with relatively low melting point. For example at 70˚C, rac-Et(2,4,7-$Me_3$Ind)$_2$Zr$Cl_2$ /MAO yields a polypropylene of molecular weight of only 30,600 with a melting point of only 145˚C.

In general therefore, metallocene catalysts, when used under industrially relevant polymerization conditions, produce iPP having melting points which are lower than the melting points of Zielger Natta iPP, and even the best metallocene catalysts produce iPP with melting points of less than 160˚C. In addition, no metallocene catalysts can produce iPP having both high melting point and high molecular weight at polymerisation temperatures above 60 ˚C.

In order to overcome this inherent limitation of metallocene catalysts, and in order to produce polypropylenes having both high melting points and high molecular weights, we have developed a new family of 2,4,7-substituted indenyl ligands and the corresponding metallocene catalysts. These metallocenes have been found to produce isotactic polypropylenes with surprisingly high melting points and very high molecular weights. The melting points of iPP made using these metallocenes are even higher than those obtainable with conventional Ziegler-Natta catalyst systems.

The catalysts of the invention comprise an aryl group at the 4-position and substituents at the 2 and 7 positions. Similar metallocenes are known in the art. In organometallics, vol 11, No. 6, 1992, some bisindenyl zirconium complexes are described in which methyl groups are present at the 4 and 7 positions of the indenyl ring.

In WO2002/02576, rac-dimethylsilanediylbis[2-methyl-4-(3,5-di-tert-butylphenyl)indenyl]hafnium metallocenes are mentioned. WO02/02575 also describes 3,5-substituted bis indenyl ligands with a silafluorendiyl bridging group. These metallocene catalysts, activated with MAO or a borate, on a silica support, at polymerisation temperatures of 60 or 70˚C, give iPP with Tm between 156 and 159 ˚C. This melting point is lower than that obtained with the metallocenes of the invention.

Metallocenes having a 2,4,7-substitution pattern on indenyls are also known. As discussed above, rac-Et(2,4,7-$Me_3$Ind)$_2$Zr$Cl_2$ gives iPP with low molecular weight, relatively low Tm when employed at normal temperature. EP-A-1209165 describes rac-$Me_2$Si(2,7-$Me_2$-4-iPrInd)$_2$Zr$Cl_2$ and rac-$Ph_2$Si(2,7-$Me_2$-4-iPrInd) $_2$Zr$Cl_2$. Both metallocenes give iPP with low melting points of 147 and 148 ˚C even when used at the relatively low polymerisation temperature of 50˚C.

In US7,405,261, rac-Et[2,7-$Me_2$-4-(4-tBuPh)Ind]$_2$Zr$Cl_2$ is reported to produce iPP with a melting point of 156˚C, by polymerizing liquid propylene at 65˚C.

WO2009/054831 describes zirconocenes with a 2-methyl-4,7-aryl substitution pattern, such as rac-$Me_2$Si[2-Me-4,7-(4-tBuPh)$_2$Ind]$_2$Zr$Cl_2$. The melting points of the homopolymers are still quite low, being in all cases below 150˚C despite the relatively low polymerization temperature of 65˚C.

The present inventors sought a new catalyst system capable of producing, inter alia, isotactic polypropylene with high melting points, high isotacticity and high molecular weights.

## Summary of Invention

Thus, viewed from one aspect the invention provides a catalyst comprising a complex of formula (I)

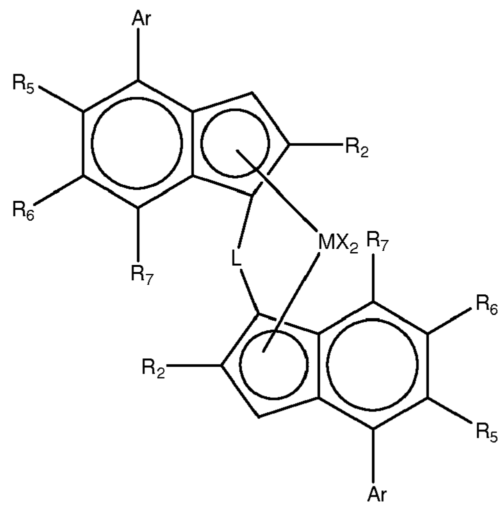

wherein
M is zirconium or hafnium;
each X is a sigma ligand;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, C1-C20-hydrocarbyl, tri(C1-C20-alkyl)silyl, C6-C20-aryl, C7-C20-arylalkyl or C7-C20-alkylaryl;
each $R_2$ is independently a C1-C20 hydrocarbyl radical optionally containing one or more heteroatoms from groups 14-16;
each $R_5$ is independently hydrogen or an aliphatic C1-20 hydrocarbyl group optionally containing one or more heteroatoms from groups 14-16;
each $R_6$ is independently hydrogen or an aliphatic C1-20 hydrocarbyl group optionally containing one or more heteroatoms from groups 14-16; or
an $R_5$ and $R_6$ group on adjacent carbon atoms can be taken together to form a 5 membered saturated carbon ring which is optionally substituted by a group $R_4$;
each $R_7$ is independently an aliphatic C1-20 hydrocarbyl group optionally containing one or more heteroatoms from groups 14-16 with at least 2 non-H atoms;
each Ar group is independently an aryl or heteroaryl group having up to 20 carbon atoms optionally substituted by one or more groups $R_1$;
each $R_1$ is a C1-20 hydrocarbyl group or two $R_1$ groups on adjacent carbon atoms taken together can form a fused 5 or 6 membered non aromatic ring with the Ar group, said ring being itself optionally substituted with one or more groups $R_4$;
each $R_4$ is a C1-20 hydrocarbyl group
and (ii) a cocatalyst comprising a compound of a group 13 metal, e.g. boron.

The catalyst of the invention can be used in non-supported form or in solid form, The catalyst of the invention may be used as a homogeneous catalyst or heterogeneous catalyst.

The catalyst of the invention in solid form, preferably in solid particulate form can be either supported on an external carrier material, like silica or alumina, or, in a particularly preferred embodiment, is free from an external carrier, however still being in solid form. Ideally, the solid catalyst is obtainable by a process in which

(a) a liquid/liquid emulsion system is formed, said liquid/liquid emulsion system comprising a solution of the catalyst components (i) and (ii) dispersed in a solvent so as to form dispersed droplets; and
(b) solid particles are formed by solidifying said dispersed droplets.

Viewed from another aspect the invention provides a process for the manufacture of a catalyst as hereinbefore defined comprising obtaining a complex of formula (I) and a cocatalyst as hereinbefore described;
forming a liquid/liquid emulsion system, which comprises a solution of catalyst components (i) and (ii) dispersed in a solvent, and solidifying said dispersed droplets to form solid particles.

Viewed from another aspect the invention provides the use in olefin polymerisation of a catalyst as hereinbefore defined, especially for the formation of a polyolefin, especially a polyethylene or polypropylene, such as isotactic polypropylene.

Viewed from another aspect the invention provides a process for the polymerisation of at least one olefin comprising reacting said at least one olefin with a catalyst as hereinbefore described, especially for the formation of isotactic polypropylene.

Viewed from another aspect the invention provides a process for producing an isotactic polypropylene with a melting point of at least 160°C comprising polymerising propylene in the presence of the catalyst as hereinbefore defined, especially wherein M is Hf and the cocatalyst is a borate.

Viewed from another aspect the invention provides a polypropylene homopolymer having a Mw/Mn of less than 4, a Mw of more than 250,000 and at least 50 wt% of the components thereof have a lamellar thickness of 24 nm or more when measured using SIST.

Alternatively viewed the invention provides a polypropylene homopolymer having a Mw/Mn of less than 4, a Mw of more than 250,000 and at least 50 wt% of the components thereof melt at a temperature of at least 170°C when measured using SIST (Stepwise Isothermal Segregation Technique).

## Definitions

Throughout the description the following definitions are employed.

By free from an external carrier is meant that the catalyst does not contain an external support, such as an inorganic support, for example, silica or alumina, or an organic polymeric support material.

The term $C_{1-20}$ hydrocarbyl group therefore includes $C_{1-20}$ alkyl, $C_{2-20}$ alkenyl, $C_{2-20}$ alkynyl, $C_{3-20}$ cycloalkyl, $C_{3-20}$ cycloalkenyl, $C_{6-20}$ aryl groups, $C_{7-20}$ alkylaryl groups or $C_{7-20}$ arylalkyl groups or of course mixtures of these groups such as cycloalkyl substituted by alkyl. Linear and branched hydrocarbyl groups cannot contain cyclic units. Aliphatic hydrocarbyl groups cannot contain aryl rings.

Unless otherwise stated, preferred $C_{1-20}$ hydrocarbyl groups are $C_{1-20}$ alkyl, $C_{4-20}$ cycloalkyl, $C_{5-20}$ cycloalkyl-alkyl groups, $C_{7-20}$ alkylaryl groups, $C_{7-20}$ arylalkyl groups or $C_{6-20}$ aryl groups, especially $C_{1-10}$ alkyl groups, $C_{6-10}$ aryl groups, or $C_{7-12}$ arylalkyl groups, e.g. $C_{1-8}$ alkyl groups. Most especially preferred hydrocarbyl groups are methyl, ethyl, propyl, isopropyl, tertbutyl, isobutyl, $C_{5-6}$-cycloalkyl, cyclohexylmethyl, phenyl or benzyl.

The term halo includes fluoro, chloro, bromo and iodo groups, especially chloro groups, when relating to the complex definition.

The oxidation state of the metal ion is governed primarily by the nature of the metal ion in question and the stability of the individual oxidation states of each metal ion.

It will be appreciated that in the complexes of the invention, the metal ion M is coordinated by ligands X so as to satisfy the valency of the metal ion and to fill its available coordination sites. The nature of these σ-ligands can vary greatly.

Catalyst activity is defined in this application to be the amount of polymer produced/g catalyst/h. Catalyst metal activity is defined here to be the amount of polymer produced/g Metal/h. The term productivity is also sometimes used to indicate the catalyst activity although herein it designates the amount of polymer produced per unit weight of catalyst.

## Detailed Description of invention

The complexes and hence catalysts of the invention are based on formula (I).

The two multicyclic ligands making up the complexes of the invention are preferably identical and hence the complexes of the invention may be symmetrical. The complexes of the invention are preferably in their *racemic* form. It is a feature of the invention, that the process described in detail below for the formation of the complexes of the invention gives rise to complexes predominantly in their *rac* form. There is low or very low *meso* form of the complexes formed, e.g. less than 20 wt% thereof.

M is preferably Hf.

Each X, which may be the same or different, is preferably a hydrogen atom, a halogen atom, a R, OR, $OSO_2CF_3$, OCOR, SR, $NR_2$ or $PR_2$ group wherein R is a linear or branched, cyclic or acyclic, C1-C20-alkyl, C2-C20 alkenyl, C2-C20 alkynyl, C6-C20-aryl, C7-C20-alkylaryl or C7-C20-arylalkyl radical; optionally containing heteroatoms belonging to groups 14-16. R is preferably a $C_{1-6}$ alkyl, phenyl or benzyl group.

Most preferably each X is independently a hydrogen atom, a halogen atom, $C_{1-6}$-alkoxy group or an R group, e.g. preferably a $C_{1-6}$-alkyl, phenyl or benzyl group. Most preferably X is chlorine or a methyl radical. Preferably both X groups are the same.

L is preferably a bridge comprising a heteroatom, such as silicon or, germanium, e.g. $-SiR^8_2-$, wherein each $R^8$ is independently C1-C20-alkyl, C6-C20-aryl or tri(C1-C20-alkyl)silyl-residue, such as trimethylsilyl. More preferably $R^8$ is $C_{1-6}$-alkyl, especially methyl. Most preferably, L is a dimethylsilyl or diethylsilyl bridge. It may also be an ethylene bridge.

$R_2$ is preferably a C1-10 hydrocarbyl group such as C1-6-hydrocarbyl group. More preferably it is a linear or branched C1-20 alkyl group. More preferably it is a linear or branched C1-6 alkyl group, especially linear C1-6 alkyl group such as methyl or ethyl.

The $R_2$ group can be interrupted by one or more heteroatoms, such as 1 or 2 heteroatoms, e.g. one heteroatom,

selected from groups 14 to 16 of the periodic table. Such a heteroatom is preferably O, N or S, especially O. More preferably however the $R_2$ group is free from heteroatoms. Most especially $R_2$ is methyl.

The Ar group is preferably a C6-20 aryl group such as a phenyl group or naphthyl group. Whilst the Ar group can be a heteroaryl group, such as carbazolyl, it is preferable that Ar is not a heteroaryl group. The Ar group can be unsubstituted but is preferably substituted by one or more groups $R_1$, more preferably by two $R_1$ groups, especially in positions 3 and 5 of the aryl ring bound to the indenyl ligand.

$R_1$ is preferably a C1-20 hydrocarbyl group, such as a C1-20 alkyl group. $R_1$ groups can be the same or different, preferably the same. More preferably, $R_1$ is a C2-10 alkyl group such as C3-8 alkyl group. Highly preferred groups are tert butyl groups. It is preferred if the group $R_1$ is bulky, i.e. is branched. Branching might be alpha or beta to the Ar ring. Branched C3-8 alkyl groups are also favoured therefore.

In a further embodiment, two $R_1$ groups on adjacent carbon atoms taken together can form a fused 5 or 6 membered non aromatic ring with the Ar group, said ring being itself optionally substituted with one or more groups $R_4$. Such a ring might form a tetrahydroindenyl group with the Ar ring or a tetrahydronaphthyl group.

If an $R_4$ group is present, there is preferably only 1 such group. It is preferably a C1-10 alkyl group.

It is preferred if there are two $R_1$ groups present on the Ar group. Where there are two $R_1$ groups present, the groups are preferably both meta to the link to the indenyl ring (3,5-positions).

Each $R_5$ is preferably hydrogen or a C1-10 alkyl group, such as methyl. Ideally $R_5$ is hydrogen.

Each $R_6$ is preferably hydrogen or a C1-10 alkyl group, such as methyl. Ideally $R_6$ is hydrogen.

An $R_5$ and $R_6$ group on adjacent carbon atoms can be taken together to form a 5 membered unsubstituted saturated carbon ring. That ring is preferably unsubstituted.

The $R_7$ group contains at least two non hydrogen atoms. It cannot therefore be methyl. It must contain two carbon atoms or one or more carbon atoms and at least one heteroatom. $R_7$ is preferably an aliphatic C2-10 hydrocarbyl group such as a C2-10 alkyl group or more preferably is an aliphatic C1-10 hydrocarbyl group containing at least one heteroatom from groups 14 to 16 of the periodic table, such as at least one N, O or S atom. That atom should be in the backbone of the hydrocarbyl group (and if N may carry an H atom). Ideally, $R_7$ is $-ZR_3$.

Z is O or S, preferably O. It is highly preferred therefore if the 7-position substituent is $OR_3$.

$R_3$ is preferably an aliphatic C1-10 hydrocarbyl group, especially a C1-10 alkyl group, more especially a branched C3-10 alkyl group Most especially $R_3$ is a C1-6 alkyl group, such as a linear C1-6 alkyl group. Ideally it is methyl or ethyl.

It is essential therefore that the complexes of the invention carry a 2,4,7-substitution pattern.

Preferred complexes of the invention are of formula (IIa)

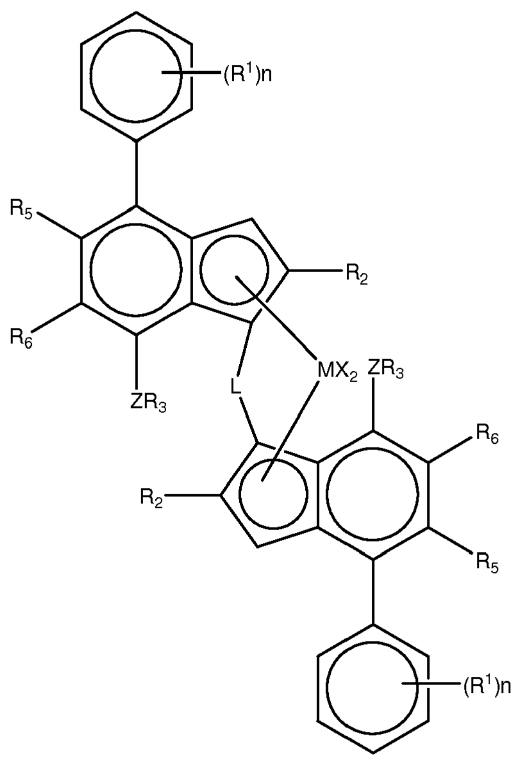

wherein
M is zirconium or hafnium;
each X is a sigma ligand, preferably each X is independently a hydrogen atom, a halogen atom, $C_{1-6}$-alkoxy group, $C_{1-6}$-alkyl, phenyl or benzyl group;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, C1-C20-hydrocarbyl, tri(C1-C20-alkyl)silyl, C6-C20-aryl, C7-C20-arylalkyl or C7-C20-alkylaryl;
each $R_2$ is a C1-10 hydrocarbyl group;
each $R_5$ is hydrogen or a C1-10 alkyl group;
each $R_6$ is hydrogen or a C1-10 alkyl group;
each Z is independently O or S;
each $R_3$ is an aliphatic C1-10-hydrocarbyl group;
n is 1 to 4, e.g. 2;
and each R' is a C1-20 hydrocarbyl group; especially (IIb).

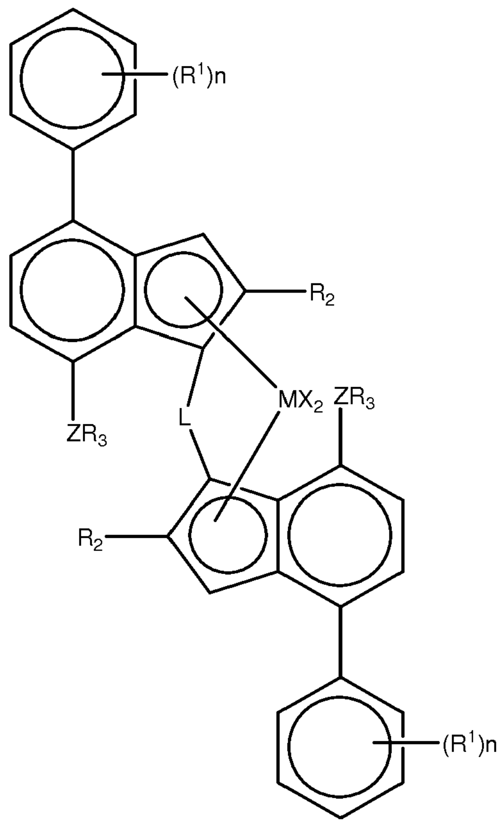

(IIb)

wherein
M is zirconium or hafnium;
each X is a sigma ligand, preferably each X is independently a hydrogen atom, a halogen atom, $C_{1-6}$-alkoxy group, $C_{1-6}$-alkyl, phenyl or benzyl group;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, C1-C20-hydrocarbyl, tri(C1-C20-alkyl)silyl, C6-C20-aryl, C7-C20-arylalkyl or C7-C20-alkylaryl;
$R_2$ is preferably a C1-10 hydrocarbyl group;
each Z is independently O or S;
each $R_3$ is an aliphatic C1-10-hydrocarbyl group;
n is 1 to 4, e.g. 2;
and each $R^1$ is a C1-20 hydrocarbyl group.
Viewed from another aspect the invention provides a complex of formula (III):

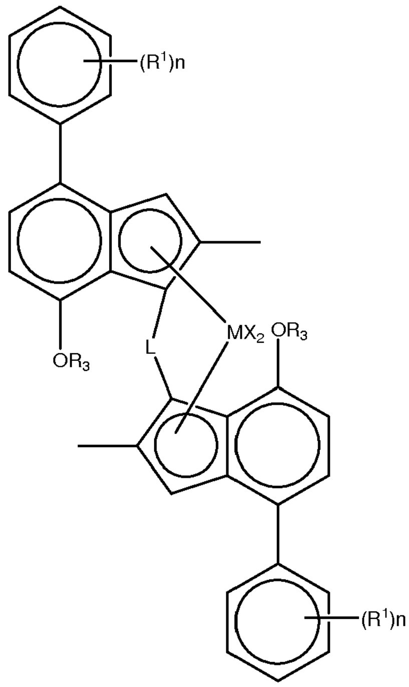

(III)

wherein M is zirconium or hafnium;
each X is a sigma ligand, preferably each X is independently a hydrogen atom, a halogen atom, $C_{1-6}$-alkoxy group, $C_{1-6}$-alkyl, phenyl or benzyl group;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, C1-C20-hydrocarbyl, tri(C1-C20-alkyl)silyl, C6-C20-aryl, C7-C20-arylalkyl or C7-C20-alkylaryl;
each $R_3$ is an aliphatic C1-10-hydrocarbyl group;
n is 1 to 4, e.g. 2;
and each $R^1$ is a C1-20 hydrocarbyl group.
Viewed from a further preferred aspect the invention provides a complex of formula (IV)

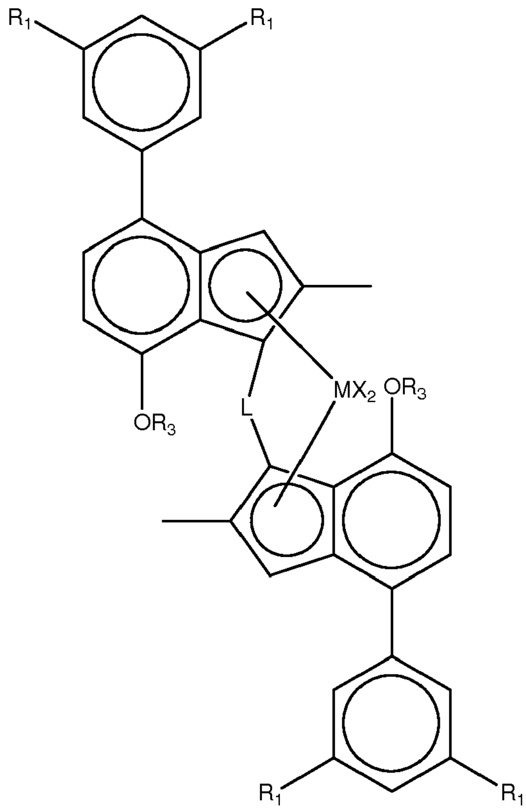

(IV)

wherein L, M and X are as hereinbefore defined (e.g. in formula (III);
$R_1$ is C1-6 alkyl; and
$R_3$ is C1-6 alkyl.
Most especially, the complex of the invention is of formula (V)

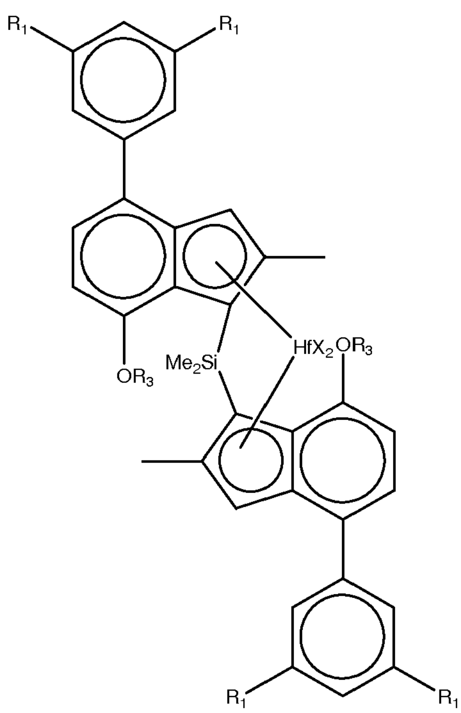

(V)

wherein X is as hereinbefore defined (e.g. halide or methyl);
$R_1$ is C1-6 alkyl; and
$R_3$ is C1-6 alkyl.
Highly preferred complexes of the invention are
1-Zr: rac-Me2Si[2-Me-4(3,5-$^tBu_2$Ph)-7-OMe-Ind]$_2$ZrCl$_2$.
1-Hf: rac-Me$_2$Si[2-Me-4(3,5-$^tBu_2$Ph)-7-OMe-Ind]$_2$HfCl$_2$.

For the avoidance of doubt, any narrower definition of a substituent offered above can be combined with any other broad or narrowed definition of any other substituent.

Throughout the disclosure above, where a narrower definition of a substituent is presented, that narrower definition is deemed disclosed in conjunction with all broad**er and narrower definitions of other substituents in the application.**

**Synthesis**

The ligands required to form the complexes and hence catalysts of the invention can be synthesised by any process and the skilled organic chemist would be able to devise various synthetic protocols for the manufacture of the necessary ligand materials.

A synthetic protocol is set out below for a specific embodiment of the invention:

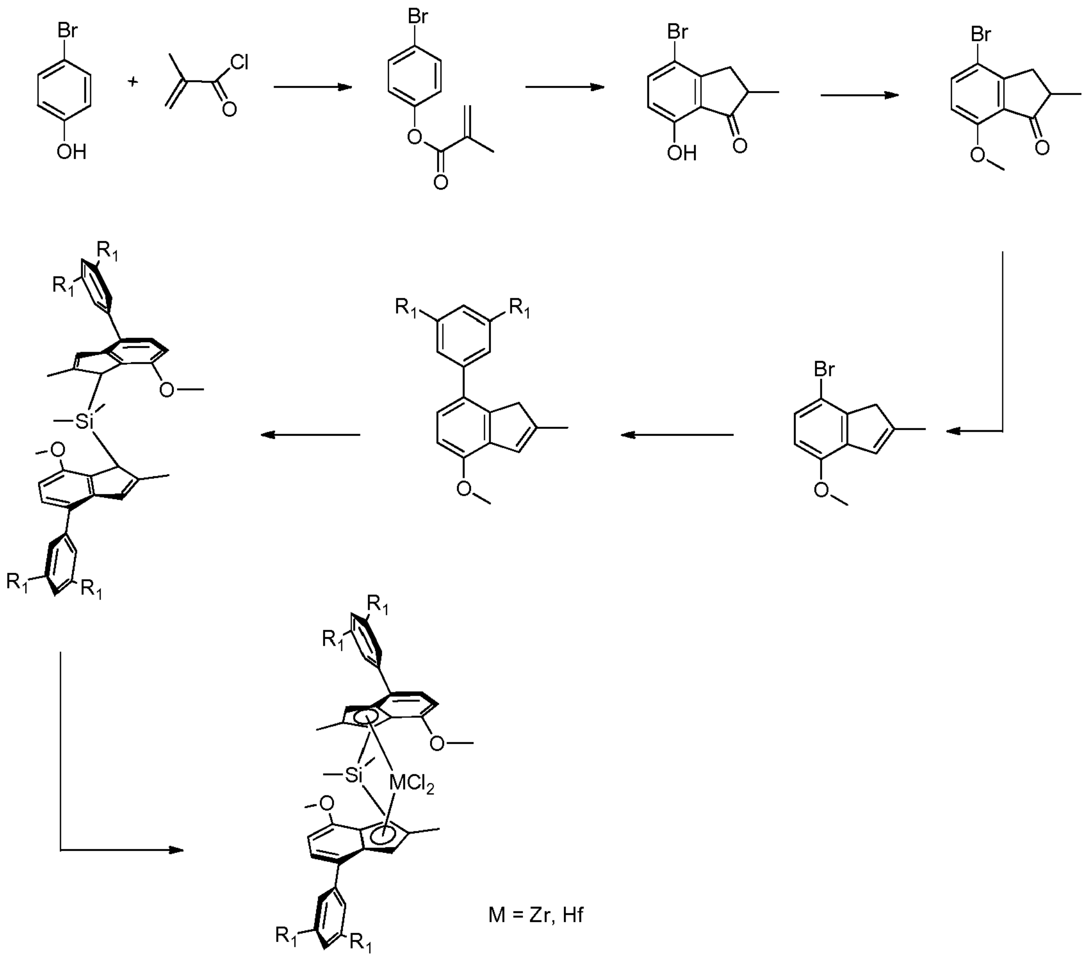


The skilled person is able to adapt this chemistry to synthesis the compounds of the invention.

It is envisaged that the presence of bulky groups on the aryl group on the 4-position of the indenyl ring ensures the desired regioselectivity during the silylation step at position 1. Ideally, the aryl group at the 4-position should carry at least two substituents, in particular substituents such as methyl, iso-propyl, neopentyl, tert-butyl or phenyl. Ideally, such bulky substituents are in the 3,5-positions of the 4-aryl substituent. Ideally they are tert-butyl groups. When unsubstituted phenyl is the aryl group, the target ligand is not obtained with the same level of selectivity.

Thus viewed from another aspect the invention provides a process for the production of a bridged ligand of

formula (VI)

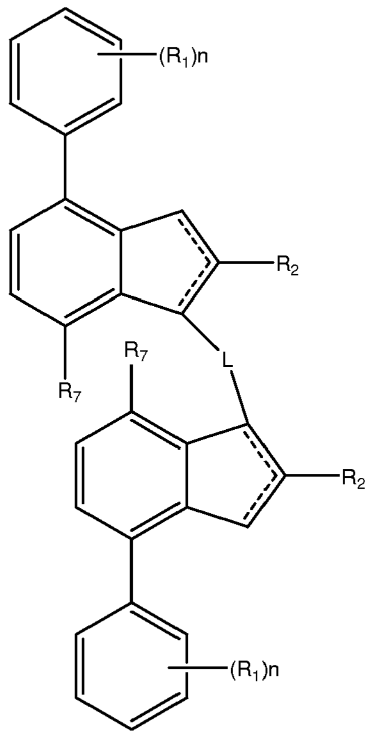

(VI)

wherein the dotted line represents a double bond present between carbon atoms 1 and 2 or 2 and 3; comprising reacting a compound of formula (VII)

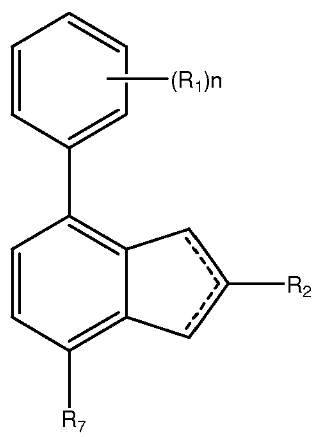

(VII)

wherein the dotted line represents a double bond present between carbon atoms 1 and 2 or 2 and 3;
$R_2$ and $R_7$ are as hereinbefore defined (e.g. in formula (I)), n is 1 to 4 and $R_1$ represents a C1-20 hydrocarbyl group; especially branched C3-20 alkyl group;
first with a base or nucleophile, then with a compound LG-L-LG, where L is as hereinbefore defined (e.g. in formula (I) and LG represents a leaving group. Preferably the double bond is located between atoms 1 and 2 in all rings or between atoms 2 and 3 in all rings. It may be of course, that a mixture of double bond isomers exists.

Suitable leaving groups are well known in the art and include halides, mesylates, tosylates and so on. The use of $LCl_2$ is preferred, especially $SiMe_2Cl_2$.

In a preferred embodiment, the invention provides ligands carrying an alkoxy group at the 7-position of the ring. The present inventors have devised a simple strategy for preparing such a compound. The preferred synthesis route involves a two step reaction to an indanone precursor. It is highly preferred therefore if the synthesis of the ligands

and hence complexes of the invention involves a compound of formula (VIII)

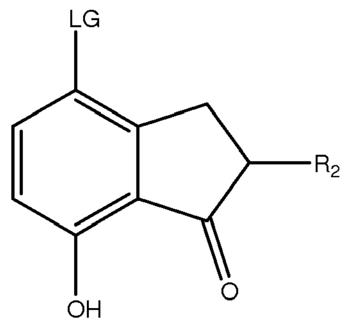

(VIII)

where $R_2$ is as hereinbefore defined (e.g. in formula (I)) and LG is a leaving group, especially a halide such as bromide. With this key intermediate the skilled man has the possibility to substitute the 4- and 7-positions independently of each other in order to tune the complex. In a further preferred embodiment therefore the formation of compound (I) or (VI) further comprises a step in which the precursor (VIII) is formed.

Thus compound (VIII) can be reacted with a variety of compounds to introduce the $R_3$ substituent onto the molecule. For example, reaction with a methyl halide introduces a methoxy group at the 7-position and so on. The intermediate

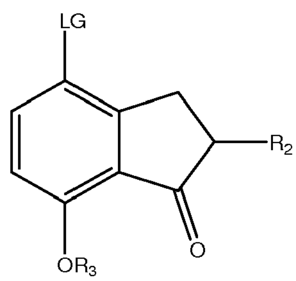

(IX)

is thus a further preferred compound in the synthetic scheme. In a further preferred embodiment therefore the formation of compound (I) or (VI) further comprises a step in which the precursor (IX) is formed.

The Ar group can be introduced using aromatic substitution chemistry or using Suzuki chemistry as described in the scheme above.

Moreover, the chemicals used in the process of the invention are not expensive and moisture is less decisive than in prior art synthetic routes. We have noted above how the presence of bulky groups at the 4-position enhances regioselectivity. During the ligand formation, the 7-substituent plays an important role too. The additional sterical hindrance leads predominantly to the *rac* form of the complex resulting in a much easier work-up procedure. In combination with our ability to manipulate the substituents in the 4- and 7-positions, this leads to superior control of the complex structure.

This results in complexes able to produce highly isotactic polypropylenes with high melting points even at high polymerization temperatures. The preferred formation of the rac-form reduces the problem of rac-meso separation.

It is noted that the presence of an alkoxy substituent at the 7-position substantially reduces the solubility of the rac isomer in light aliphatic hydrocarbons such as pentane or hexane. This further allows the possibility of separating the rac-form of the complex from the impurities by washing with aliphatic solvents. This is an important feature of the invention. It has been difficult in the prior art to separate meso and rac isomers of these fairly bulky metallocene ligands. It is most surprising that the presence of the 7-position group changes the solubility of the rac isomer relative to the meso isomer by such an extent that it becomes possible to separate these two using their different solubilities.

Additional crystallization procedures can be used, in order to further increase the purity of the rac-form of the complex.

**Intermediates**

Whilst the invention primarily relates to catalysts, it will be appreciated that the complexes of the invention and the ligands used to form those complexes are also new. The invention further relates therefore to complexes of formula

(I) and ligands of formula (I) from which the $MX_2$ coordination has been removed and the proton returned to the indenyl. Ligands of interest are therefore of formula (I')

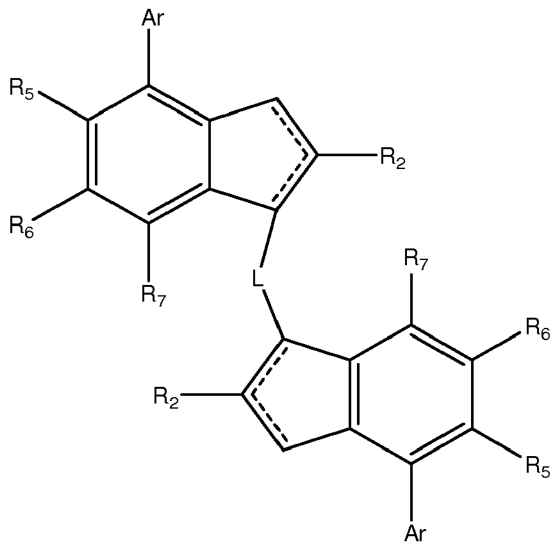

(I')

wherein the substituents are as hereinbefore defined. It will be appreciated therefore that this molecule contains double bond isomers. By double bond isomers is meant the compounds where the double bond is positioned between the 2 and 3 atoms rather than 1 and 2 atoms of the bicyclic ring. It may be that more than one double bond isomer is present in a sample. Preferred ligands are analogues of the complexes described above from which $MX_2$ coordination has been removed and the proton returned to the indenyl.

**Cocatalyst**

To form an active catalytic species it is normally necessary to employ a cocatalyst as is well known in the art. Cocatalysts comprising one or more compounds of Group 13 metals, like organoaluminium compounds or borates used to activate metallocene catalysts are suitable for use in this invention.

The olefin polymerisation catalyst system of the invention comprises (i) a complex in which the metal ion is coordinated by a ligand of the invention; and normally (ii) an aluminium alkyl compound (or other appropriate cocatalyst), or the reaction product thereof. Thus the cocatalyst is preferably an alumoxane, like MAO or an alumoxane other than MAO.

It has been surprisingly found however, that higher melting points can be achieved if borate cocatalysts are employed. It will be appreciated by the skilled man that where boron based cocatalysts are employed, it is normal to preactivate the complex by reaction thereof with an aluminium alkyl compound, such as TIBA. This procedure is well known and any suitable aluminium alkyl, e.g. Al($C_{1-6}$-alkyl)3. can be used.

Boron based cocatalysts of interest include those of formula

$$BY_3$$

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, tolyl, benzyl groups, p-fluorophenyl, 3,5- difluorophenyl, pentachlorophenyl, pentafluorophenyl, 3,4,5-trifluorophenyl and 3,5- di(trifluoromethyl)phenyl. Preferred options are trifluoroborane, triphenylborane, tris(4-fluorophenyl) borane, tris(3,5- difluorophenyl)borane, tris(4-fluoromethylphenyl)borane, tris(2,4,6-trifluorophenyl)borane, tris(pentafluorophenyl)borane, tris(tolyl)borane, tris(3,5-dimethyl-phenyl)borane, tris(3,5- difluorophenyl)borane and/or tris (3,4,5-trifluorophenyl)borane.

Particular preference is given to tris(pentafluorophenyl)borane.

It is preferred however is borates are used, i.e. compounds containing a borate 3+ ion. Such ionic cocatalysts preferably contain a non-coordinating anion such as tetrakis(pentafluorophenyl)borate and tetraphenylborate. Suitable

counterions are protonated amine or aniline derivatives such as methylammonium, anilinium, dimethylammonium, diethylammonium, N- methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

Preferred ionic compounds which can be used according to the present invention include: triethylammoniumtetra(phenyl)borate, tributylammoniumtetra(phenyl)borate, trimethylammoniumtetra(tolyl)borate, tributylammoniumtetra(tolyl)borate, tributylammoniumtetra(pentafluorophenyl)borate, tripropylammoniumtetra(dimethylphenyl)borate, tributylammoniumtetra(trifluoromethylphenyl)borate, tributylammoniumtetra(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetra(phenyl)borate, N,N-diethylaniliniumtetra(phenyl)borate, N,N-dimethylaniliniumtetrakis(pentafluorophenyl)borate, N,N-di(propyl)ammoniumtetrakis(pentafluorophenyl)borate, di(cyclohexyl)ammoniumtetrakist(pentafluorophenyl)borate, triphenylphosphoniumtetrakis(phenyl)borate, triethylphosphoniumtetrakis(phenyl)borate, diphenylphosphoniumtetrakis(phenyl)borate, tri(methylphenyl)phosphoniumtetrakis(phenyl)borate, tri(dimethylphenyl)phosphoniumtetrakis(phenyl)borate, triphenylcarbeniumtetrakis(pentafluorophenyl)borate, or ferroceniumtetrakis(pentafluorophenyl)borate. Preference is given to triphenylcarbeniumtetrakis(pentafluorophenyl) borate, N,N-dimethylcyclohexylammoniumtetrakis(pentafluorophenyl)borate or N5N-dimethylbenzylammoniumtetrakis(pentafluorophenyl)borate.

The use of $B(C_6F_5)_3$, $C_6H_5N(CH_3)_2H{:}B(C_6F_5)_4$, $(C_6H_5)_3C{:}B(C_6F_5)_4$ or $Ni(CN)_4[B(C_6F_5)_3]_4^{2-}$ is especially preferred.

Suitable amounts of cocatalyst will be well known to the skilled man.

**Catalyst Manufacture**

The metallocene complex of the present invention can be used in combination with a suitable cocatalyst as a catalyst for the polymerization of olefins, e.g. in a solvent such as toluene or an aliphatic hydrocarbon, (i.e. for polymerization in solution), as it is well known in the art. Preferably, polymerization of olefins, especially propylene, takes place in the condensed phase or in gas phase.

The catalyst of the invention can be used in supported or unsupported form. It is preferred if a supported catalyst is used, as is well known in the art. The particulate support material used is preferably an organic or inorganic material, such as silica, alumina or zirconia or a mixed oxide such as silica-alumina, in particular silica, alumina or silica-alumina. The use of a silica support is preferred. The skilled man is aware of the procedures required to support a metallocene catalyst.

Especially preferably the support is a porous material so that the complex may be loaded into the pores of the support, e.g. using a process analogous to those described in WO94/14856 (Mobil), WO95/12622 (Borealis) and WO2006/097497. The particle size is not critical but is preferably in the range 5 to 200 $\mu$m, more preferably 20 to 80 $\mu$m. The use of these supports is routine in the art.

In an alternative embodiment, no support is used at all. Such a catalyst can be prepared in solution, for example in an aromatic solvent like toluene, by contacting the metallocene (as a solid or as a solution) with the cocatalyst, for example methylaluminoxane or a borane or a borate salt previously dissolved in an aromatic solvent, or can be prepared by sequentially adding the dissolved catalyst components to the polymerization medium. In a preferred embodiment, the metallocene (when X differs from alkyl or hydrogen) is prereacted with an aluminum alkyl, in a ratio metal/aluminum of from 1:1 up to 1:500, preferably from 1:1 up to 1:250, and then combined with a solution of the borane or borate cocatalyst dissolved in an aromatic solvent, either in a separate vessel or directly into the polymerization reactor. Preferred metal/boron ratios are between 1:1 and 1:100, more preferably 1:1 to 1:10.

In one particular embodiment, no external carrier is used but the catalyst is still presented in solid particulate form. Thus no external support material such as inert organic or inorganic carrier, such as for example silica as described above is employed..

In order to provide the catalyst of the invention in solid form but without using an external carrier, it is preferred

if a liquid/liquid emulsion system is used. The process involves forming dispersing catalyst components (i) and (ii) in a solvent, and solidifying said dispersed droplets to form solid particles.

In particular, the method involves preparing a solution of one or more catalyst components; dispersing said solution in an solvent to form an emulsion in which said one or more catalyst components are present in the droplets of the dispersed phase; immobilising the catalyst components in the dispersed droplets, in the absence of an external particulate porous support, to form solid particles comprising the said catalyst, and optionally recovering said particles.

This process enables the manufacture of active catalyst particles with improved morphology, e.g. with a predetermined spherical shape, surface properties and particle size and without using any added external porous support material, such as an inorganic oxide, e.g. silica. By the term "preparing a solution of one or more catalyst components" is meant that the catalyst forming compounds may be combined in one solution which is dispersed to the immiscible solvent, or, alternatively, at least two separate catalyst solutions for each part of the catalyst forming compounds may be prepared, which are then dispersed successively to the solvent.

In a preferred method for forming the catalyst at least two separate solutions for each or part of said catalyst may be prepared, which are then dispersed successively to the immiscible solvent.

More preferably, a solution of the complex comprising the transition metal compound and the cocatalyst is combined with the solvent to form an emulsion wherein that inert solvent forms the continuous liquid phase and the solution comprising the catalyst components forms the dispersed phase (discontinuous phase) in the form of dispersed droplets. The droplets are then solidified to form solid catalyst particles, and the solid particles are separated from the liquid and optionally washed and/or dried. The solvent forming the continuous phase may be immiscible to the catalyst solution at least at the conditions (e. g. temperatures) used during the dispersing step.

The term "immiscible with the catalyst solution" means that the solvent (continuous phase) is fully immiscible or partly immiscible i.e. not fully miscible with the dispersed phase solution.

Preferably said solvent is inert in relation to the compounds of the catalyst system to be produced. Full disclosure of the necessary process can be found in WO03/051934 which is herein incorporated by reference.

The inert solvent must be chemically inert at least at the conditions (e.g. temperature) used during the dispersing step. Preferably, the solvent of said continuous phase does not contain dissolved therein any significant amounts of catalyst forming compounds. Thus, the solid particles of the catalyst are formed in the droplets from the compounds which originate from the dispersed phase (i.e. are provided to the emulsion in a solution dispersed into the continuous phase).

The terms "immobilisation" and "solidification" are used herein interchangeably for the same purpose, i.e. for forming free flowing solid catalyst particles in the absence of an external porous particulate carrier, such as silica. The solidification happens thus within the droplets. Said step can be effected in various ways as disclosed in said WO03/051934 Preferably solidification is caused by an external stimulus to the emulsion system such as a temperature change to cause the solidification. Thus in said step the catalyst component (s) remain "fixed" within the formed solid particles. It is also possible that one or more of the catalyst components may take part in the solidification/immobilisation reaction.

Accordingly, solid, compositionally uniform particles having a predetermined particle size range can be obtained.

Furthermore, the particle size of the catalyst particles of the invention can be controlled by the size of the droplets in the solution, and spherical particles with a uniform particle size distribution can be obtained.

The invention is also industrially advantageous, since it enables the preparation of the solid particles to be carried out as a one-pot procedure. Continuous or semicontinuous processes are also possible for producing the catalyst.

### Dispersed Phase

The principles for preparing two phase emulsion systems are known in the chemical field. Thus, in order to form the two phase liquid system, the solution of the catalyst component (s) and the solvent used as the continuous liquid phase have to be essentially immiscible at least during the dispersing step. This can be achieved in a known manner e.g. by choosing said two liquids and/or the temperature of the dispersing step/solidifying step accordingly.

A solvent may be employed to form the solution of the catalyst component (s). Said solvent is chosen so that it dissolves said catalyst component (s). The solvent can be preferably an organic solvent such as used in the field, comprising an optionally substituted hydrocarbon such as linear or branched aliphatic, alicyclic or aromatic hydrocarbon, such as a linear or cyclic alkane, an aromatic hydrocarbon and/or a halogen containing hydrocarbon.

Examples of aromatic hydrocarbons are toluene, benzene, ethylbenzene, propylbenzene, butylbenzene and xylene. Toluene is a preferred solvent. The solution may comprise one or more solvents. Such a solvent can thus be used to facilitate the emulsion formation, and usually does not form part of the solidified particles, but e.g. is removed after the solidification step together with the continuous phase.

Alternatively, a solvent may take part in the solidification, e.g. an inert hydrocarbon having a high melting point (waxes), such as above 40˚C, suitably above 70˚C, e. g. above 80˚C or 90˚C, may be used as solvents of the dispersed

phase to immobilise the catalyst compounds within the formed droplets.

In another embodiment, the solvent consists partly or completely of a liquid monomer, e.g. liquid olefin monomer designed to be polymerised in a "prepolymerisation" immobilisation step.

## Continuous Phase

The solvent used to form the continuous liquid phase is a single solvent or a mixture of different solvents and may be immiscible with the solution of the catalyst components at least at the conditions (e.g. temperatures) used during the dispersing step. Preferably said solvent is inert in relation to said compounds.

The term "inert in relation to said compounds" means herein that the solvent of the continuous phase is chemically inert, i.e. undergoes no chemical reaction with any catalyst forming component. Thus, the solid particles of the catalyst are formed in the droplets from the compounds which originate from the dispersed phase, i.e. are provided to the emulsion in a solution dispersed into the continuous phase.

It is preferred that the catalyst components used for forming the solid catalyst will not be soluble in the solvent of the continuous liquid phase. Preferably, said catalyst components are essentially insoluble in said continuous phase forming solvent.

Solidification takes place essentially after the droplets are formed, i.e. the solidification is effected within the droplets e.g. by causing a solidifying reaction among the compounds present in the droplets. Furthermore, even if some solidifying agent is added to the system separately, it reacts within the droplet phase and no catalyst forming components go into the continuous phase.

The term "emulsion" used herein covers both bi-and multiphasic systems.

In a preferred embodiment said solvent forming the continuous phase is an inert solvent including a halogenated organic solvent or mixtures thereof, preferably fluorinated organic solvents and particularly semi, highly or perfluorinated organic solvents and functionalised derivatives thereof. Examples of the above-mentioned solvents are semi, highly or perfluorinated hydrocarbons, such as alkanes, alkenes and cycloalkanes, ethers, e.g. perfluorinated ethers and amines, particularly tertiary amines, and functionalised derivatives thereof. Preferred are semi, highly or perfluorinated, particularly perfluorinated hydrocarbons, e.g. perfluorohydrocarbons of e.g. C3-C30, such as C4-C10. Specific examples of suitable perfluoroalkanes and perfluorocycloalkanes include perfluoro-hexane, -heptane, -octane and - (methylcyclohexane). Semi fluorinated hydrocarbons relates particularly to semifluorinated n-alkanes, such as perfluoroalkyl-alkane.

"Semi fluorinated" hydrocarbons also include such hydrocarbons wherein blocks of -C-F and -C-H alternate. "Highly fluorinated" means that the majority of the -C-H units are replaced with -C-F units. "Perfluorinated" means that all -C-H units are replaced with -C-F units. See the articles of A. Enders and G. Maas in "Chemie in unserer Zeit", 34. Jahrg. 2000, Nr.6, and of Pierandrea Lo Nostro in "Advances in Colloid and Interface Science", 56 (1995) 245-287, Elsevier Science.

## Dispersing step

The emulsion can be formed by any means known in the art: by mixing, such as by stirring said solution vigorously to said solvent forming the continuous phase or by means of mixing mills, or by means of ultra sonic wave, or by using a so called phase change method for preparing the emulsion by first forming a homogeneous system which is then transferred by changing the temperature of the system to a biphasic system so that droplets will be formed.

The two phase state is maintained during the emulsion formation step and the solidification step, as, for example, by appropriate stirring.

Additionally, emulsifying agents/emulsion stabilisers can be used, preferably in a manner known in the art, for facilitating the formation and/or stability of the emulsion. For the said purposes e.g. surfactants, e.g. a class based on hydrocarbons (including polymeric hydrocarbons with a molecular weight e.g. up to 10 000 and optionally interrupted with a heteroatom(s)), preferably halogenated hydrocarbons, such as semi- or highly fluorinated hydrocarbons optionally having a functional group selected e.g. from -OH, -SH, $NH_2$, $NR''_2$. -COOH, $-COONH_2$, oxides of alkenes, $-CR''=CH_2$, where R" is hydrogen, or C1-C20 alkyl, C2-20-alkenyl or C2-20-alkynyl group, oxo-groups, cyclic ethers and/or any reactive derivative of these groups, like alkoxy, or carboxylic acid alkyl ester groups, or, preferably semi-, highly- or perfluorinated hydrocarbons having a functionalised terminal, can be used. The surfactants can be added to the catalyst solution, which forms the dispersed phase of the emulsion, to facilitate the forming of the emulsion and to stabilize the emulsion.

Alternatively, an emulsifying and/or emulsion stabilising aid can also be formed by reacting a surfactant precursor bearing at least one functional group with a compound reactive with said functional group and present in the catalyst solution or in the solvent forming the continuous phase. The obtained reaction product acts as the actual emulsifying aid and or stabiliser in the formed emulsion system.

Examples of the surfactant precursors usable for forming said reaction product include e.g. known surfactants

which bear at least one functional group selected e.g. from -OH, -SH, $NH_2$, $NR''_2$. -COOH, -$COONH_2$, oxides of alkenes, - $CR''=CH_2$, where R" is hydrogen, or C1-C20 alkyl, C2-20-alkenyl or C2-20-alkynyl group, oxo-groups, cyclic ethers with 3 to 5 ring atoms, and/or any reactive derivative of these groups, like alkoxy or carboxylic acid alkyl ester groups; e.g. semi-, highly or perfluorinated hydrocarbons bearing one or more of said functional groups. Preferably, the surfactant precursor has a terminal functionality as defined above.

The compound reacting with such surfactant precursor is preferably contained in the catalyst solution and may be a further additive or one or more of the catalyst forming compounds. Such compound is e.g. a compound of group 13 (e.g. MAO and/or an aluminium alkyl compound and/or a transition metal compound).

If a surfactant precursor is used, it is preferably first reacted with a compound of the catalyst solution before the addition of the transition metal compound. In one embodiment e.g. a highly fluorinated C1-n (suitably C4-30-or C5-15) alcohol (e.g. highly fluorinated heptanol, octanol or nonanol), oxide (e.g. propenoxide) or acrylate ester is reacted with a cocatalyst to form the "actual" surfactant. Then, an additional amount of cocatalyst and the transition metal compound is added to said solution and the obtained solution is dispersed to the solvent forming the continuous phase. The "actual" surfactant solution may be prepared before the dispersing step or in the dispersed system. If said solution is made before the dispersing step, then the prepared "actual" surfactant solution and the transition metal solution may be dispersed successively (e. g. the surfactant solution first) to the immiscible solvent, or be combined together before the dispersing step.

**Solidification**

The solidification of the catalyst component(s) in the dispersed droplets can be effected in various ways, e.g. by causing or accelerating the formation of said solid catalyst forming reaction products of the compounds present in the droplets. This can be effected, depending on the used compounds and/or the desired solidification rate, with or without an external stimulus, such as a temperature change of the system.

In a particularly preferred embodiment, the solidification is effected after the emulsion system is formed by subjecting the system to an external stimulus, such as a temperature change. Temperature differences of e.g. 5 to 100˚C, such as 10 to 100˚C, or 20 to 90˚C, such as 50 to 90˚C.

The emulsion system may be subjected to a rapid temperature change to cause a fast solidification in the dispersed system. The dispersed phase may e. g. be subjected to an immediate (within milliseconds to few seconds) temperature change in order to achieve an instant solidification of the component (s) within the droplets. The appropriate temperature change, i. e. an increase or a decrease in the temperature of an emulsion system, required for the desired solidification rate of the components cannot be limited to any specific range, but naturally depends on the emulsion system, i. a. on the used compounds and the concentrations/ratios thereof, as well as on the used solvents, and is chosen accordingly. It is also evident that any techniques may be used to provide sufficient heating or cooling effect to the dispersed system to cause the desired solidification.

In one embodiment the heating or cooling effect is obtained by bringing the emulsion system with a certain temperature to an inert receiving medium with significantly different temperature, e. g. as stated above, whereby said temperature change of the emulsion system is sufficient to cause the rapid solidification of the droplets. The receiving medium can be gaseous, e. g. air, or a liquid, preferably a solvent, or a mixture of two or more solvents, wherein the catalyst component (s) is (are) immiscible and which is inert in relation to the catalyst component (s). For instance, the receiving medium comprises the same immiscible solvent used as the continuous phase in the first emulsion formation step.

Said solvents can be used alone or as a mixture with other solvents, such as aliphatic or aromatic hydrocarbons, such as alkanes. Preferably a fluorinated solvent as the receiving medium is used, which may be the same as the continuous phase in the emulsion formation, e. g. perfluorinated hydrocarbon.

Alternatively, the temperature difference may be effected by gradual heating of the emulsion system, e. g. up to 10˚C per minute, preferably 0.5 to 6˚C per minute and more preferably in 1 to 5˚C per minute.

In case a melt of e. g. a hydrocarbon solvent is used for forming the dispersed phase, the solidifcation of the droplets may be effected by cooling the system using the temperature difference stated above.

Preferably, the "one phase" change as usable for forming an emulsion can also be utilised for solidifying the catalytically active contents within the droplets of an emulsion system by, again, effecting a temperature change in the dispersed system, whereby the solvent used in the droplets becomes miscible with the continuous phase, preferably a fluorous continuous phase as defined above, so that the droplets become impoverished of the solvent and the solidifying components remaining in the "droplets" start to solidify. Thus the immiscibility can be adjusted with respect to the solvents and conditions (temperature) to control the solidification step.

The miscibility of e.g. organic solvents with fluorous solvents can be found from the literature and be chosen accordingly by a skilled person. Also the critical temperatures needed for the phase change are available from the literature or can be determined using methods known in the art, e. g. the Hildebrand-Scatchard-Theorie. Reference is

also made to the articles of A. Enders and G. and of Pierandrea Lo Nostro cited above.

Thus according to the invention, the entire or only part of the droplet may be converted to a solid form. The size of the "solidified"droplet may be smaller or greater than that of the original droplet, e. g. if the amount of the monomer used for the prepolymerisation is relatively large.

The solid catalyst particles recovered can be used, after an optional washing step, in a polymerisation process of an olefin. Alternatively, the separated and optionally washed solid particles can be dried to remove any solvent present in the particles before use in the polymerisation step. The separation and optional washing steps can be effected in a known manner, e. g. by filtration and subsequent washing of the solids with a suitable solvent.

The droplet shape of the particles may be substantially maintained. The formed particles may have an average size range of 1 to 500 μm, e.g. 5 to 500 μm, advantageously 5 to 200 μm or 10 to 150 μm. Even an average size range of 5 to 60 μm is possible. The size may be chosen depending on the polymerisation the catalyst is used for. Advantageously, the particles are essentially spherical in shape, they have a low porosity and a low surface area.

The formation of solution can be effected at a temperature of 0-100˚C, e.g. at 20-80˚C. The dispersion step may be effected at -20 ˚C-100˚C, e.g. at about -10-70˚C, such as at -5 to 30˚C, e.g. around 0 ˚C.

To the obtained dispersion an emulsifying agent as defined above, may be added to improve/stabilise the droplet formation. The solidification of the catalyst component in the droplets is preferably effected by raising the temperature of the mixture, e.g. from 0 ˚C temperature up to 100˚C, e.g. up to 60-90˚C, gradually. E.g. in 1 to 180 minutes, e.g. 1-90 or 5-30 minutes, or as a rapid heat change. Heating time is dependent on the size of the reactor.

During the solidification step, which is preferably carried out at about 60 to 100 ˚C, preferably at about 75 to 95 ˚C, (below the boiling point of the solvents) the solvents may preferably be removed and optionally the solids are washed with a wash solution, which can be any solvent or mixture of solvents such as those defined above and/or used in the art, preferably a hydrocarbon, such as pentane, hexane or heptane, suitably heptane. The washed catalyst can be dried or it can be slurried into an oil and used as a catalyst-oil slurry in polymerisation process.

All or part of the preparation steps can be done in a continuous manner. Reference is made to WO2006/069733 describing principles of such a continuous or semicontinuous preparation methods of the solid catalyst types, prepared via emulsion/solidification method.

**Polymerisation**

The olefin polymerized using the catalyst of the invention is preferably propylene or a higher alpha-olefin. It may also be ethylene or a mixture of ethylene and an α-olefin. Alternatively, it may also be mixture of alpha olefins, for example $C_{2-20}$ olefins, e.g. ethylene, propylene, 1-butene, 1-hexene, 4-methyl-1-pentene, 1-octene etc. The olefins polymerized in the method of the invention may include any compound which includes unsaturated polymerizable groups. Thus for example unsaturated compounds, such as $C_{6-20}$ olefins (including cyclic and polycyclic olefins (e.g. norbornene)), and polyenes, especially $C_{4-20}$ dienes, may be included in a comonomer mixture with lower olefins, e.g. $C_{2-5}$ α-olefins. Diolefins (i.e. dienes) are suitably used for introducing long chain branching into the resultant polymer. Examples of such dienes include α,ω linear dienes such as 1,5-hexadiene, 1,6-heptadiene, 1,8-nonadiene, 1,9-decadiene, etc.

The catalysts of the present invention are particularly suited for use in the manufacture of polypropylene polymers, either copolymers or especially homopolymers thereof.

As comonomers to propylene are preferably used ethylene, or higher olefins, e.g. C4-C12 olefins, like 1-butene, 1-hexene, 1-octene or any mixtures thereof, preferably ethylene. It is especially preferred if the copolymer is a propylene ethylene random copolymer. The ethylene content in such a polymer may be up to 50 wt%, e.g. 0.5 to 20 wt%.

Most especially, the catalyst are used to manufacture isotactic polypropylene.

Polymerization in the method of the invention may be effected in one or more, e.g. 1, 2 or 3, polymerization reactors, using conventional polymerization techniques, e.g. gas phase, solution phase, slurry or bulk polymerization.

In general, a combination of slurry (or bulk) and at least one gas phase reactor is often preferred, particularly with the reactor order being slurry (or bulk) then one or more gas phase reactors.

In case of propylene polymerisation for slurry reactors, the reaction temperature will generally be in the range 60 to 110˚C (e.g. 60-90˚C), the reactor pressure will generally be in the range 5 to 80 bar (e.g. 20-60 bar), and the residence time will generally be in the range 0.1 to 5 hours (e.g. 0.3 to 2 hours). The monomer is usually used as reaction medium.

For gas phase reactors, the reaction temperature used will generally be in the range 60 to 115˚C (e.g. 70 to 110˚C), the reactor pressure will generally be in the range 10 to 25 bar, and the residence time will generally be 0,5 to 8 hours (e.g. 0,5 to 4 hours). The gas used will be the monomer optionally as mixture with a nonreactive gas such as nitrogen or propane. In addition to actual polymerisation steps and reactors, the process can contain any additional polymerisation steps, like prepolymerisation step, and any further after reactor handling steps as known in the art.

For solution polymerization, an aliphatic or aromatic solvent can be used to dissolve the monomer and the polymer, and the polymerization temperature will generally be in the range 80 to 200˚C (e.g. 90 to 150˚C)

Generally the quantity of catalyst used will depend upon the nature of the catalyst, the reactor types and conditions and the properties desired for the polymer product. As is well known in the art hydrogen can be used for controlling the molecular weight of the polymer.

It is a feature of the invention that the claimed catalysts enable the formation of polymers with remarkably high melting points and with remarkably high molecular weight. These features can be achieved at commercially interesting polymerisation temperatures, e.g. 60˚C or more. It is a preferred feature of the invention that the catalysts of the invention are used to polymerise propylene at a temperature of at least 60˚C, preferably at least 65˚C, such as at least 70˚C.

The Mw of the polymers made using the catalysts of the invention may exceed 200,000, preferably at least 250,000, e.g. at least 350,000. Values of more than 500,000 have also been achieved. Mw/Mn values are generally low, e.g. less than 4, such as less than 3.5 or even less than 3.

Melting points can be 155˚C or more, such as 157˚C or more, preferably 159˚C or more, especially 160˚C or more. Melting points of 163˚C or more such as 165˚C or more, preferably 168˚C or more, even 170˚C or more have been achieved. These properties can be achieved due to the very low content of 2,1,-regioerrors, e.g. less than 0.25% of such errors. There is a clear correlation between polymerisation temperature and melting point, that is isotacticity. Whilst melting points drop as polymerisation temperatures increase, values remain high with the catalysts of the invention. Melting points as high as 170 ˚C can be obtained using the hafnocene complex of the present invention, and the suitable polymerization conditions. It is also quite remarkable that the catalysts formed by activating the complexes of the present invention with methylalumoxane produce isotactic polypropylenes whose melting point is independent from the polymerization temperature up to at least 85 ˚C.

The catalysts of the invention enable the formation of high molecular weight, high melting point polypropylene polymers which also possess high isotacticity and very low xylene soluble fractions.

Polypropylenes made by the metallocenes of the invention can be made with $MFR_2$ values in the whole range of interest, that is from very high (as high as 2000, for example 1000 or 500) to very low, that is fractional values (<1). Hydrogen can be used to manipulate MFR as is well known.

The SIST (Stepwise Isothermal Segregation Technique) is used for annealing polyolefin samples and measuring the melting enthalpies and temperatures of the annealed samples by DSC. In the SIST analysis the sample is first molten and then crystallized isothermally, taking the sample stepwise and gradually to lower temperatures.

Annealing polyolefin samples by stepwise crystallization can induce changes in the melting behaviour of the polyolefin. The annealing leads to fractionation based on the structure or morphology of the sample in question.

Typically the DSC melting curve of the annealed samples shows several resolved peaks during the melting instead of one or two broad peaks in normal DSC. With the analysis of the magnitude and the number of these peaks, structural (composition distribution) and morphological studies (lamellar thickness) of polyolefins can be made.

The propylene polymers of the present invention possess a remarkable SIST profile. In particular, polymers made using the catalyst of the invention can possess 50 wt% or more of a fraction having a lamellular thickness of at least 24 nm. Alternatively viewed the polymers made using the catalyst of the invention can possess 50 wt% or more of a fraction melting above 170˚C.

The propylene polymers made using the catalysts of the invention therefore form a still yet further aspect of the invention. Viewed from another aspect the invention provides a polypropylene homopolymer having a Mw/Mn of less than 4, a Mw of more than 250,000 and at least 50 wt% of the components therefore have a lamellar thickness of 24 nm or more when measured using SIST.

Alternatively viewed the invention provides a polypropylene homopolymer having a Mw/Mn of less than 4, a Mw of more than 250,000 and at least 50 wt% of the components therefore melt at a temperature of at least 170˚C when measured using (SIST Stepwise Isothermal Segregation Technique).

The polymers of the invention also possess excellent thermal stability as shown by DMTA (Dinamic-Mechanical Thermal Analysis). The value of G' at 120˚C can be 10% or more, such as 20% or more higher than typically achieved for isotactic polypropylene. This indicates a higher mechanical stability of the polypropylenes of the present invention at the higher temperatures.

Values therefore of 150 MPa or more, such as 160 MPa or more, preferably 170MPa or more can be achieved, for example, at temperatures as high as 120˚C.

The polymers made by the catalysts of the invention are useful in all kinds of end articles such as pipes, films (cast, blown or BOPP films, such as for example BOPP for capacitor film), fibers, moulded articles (e.g. injection moulded, blow moulded, rotomoulded articles), extrusion coatings and so on.

The invention will now be illustrated by reference to the following nonlimiting examples and figures.

Figure 1 shows lamellar thickness distribution for Example 1 of the invention and a comparative polymer.
Figure 2 shows front view (top) and side view (bottom) of the molecular structure of 1-Zr (XRD).

**Measurement methods:**

**Al and Zr determination (ICP-method)**

The elementary analysis of a catalyst was performed by taking a solid sample of mass, M, cooling over dry ice. Samples were diluted up to a known volume, V, by dissolving in nitric acid ($HNO_3$, 65 %, 5 % of V) and freshly deionised (DI) water (5 % of V). The solution was then added to hydrofluoric acid (HF, 40 %, 3 % of V), diluted with DI water up to the final volume, V, and left to stabilise for two hours. The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$, 3 % HF in DI water), a low standard (10 ppm Al in a solution of 5 % $HNO_3$, 3 % HF in DI water), a high standard (50 ppm Al, 20 ppm Zr in a solution of 5 % $HNO_3$, 3 % HF in DI water) and a quality control sample (20 ppm Al, 10 ppm Zr in a solution of 5 % $HNO_3$, 3 % HF in DI water). The content of zirconium was monitored using the 339.198 nm line, the content of aluminium via the 396.152 nm line and the potassium using the 766.490 nm line. The reported values, required to be between 0 and 100, or further dilution is required, are an average of three successive aliquots taken from the same sample and are related back to the original catalyst using equation 1.

$$C = \frac{R \times V}{M}$$

Equation 1

Where: C is the concentration in ppm, related to % content by a factor of 10,000
R is the reported value from the ICP-AES
V is the total volume of dilution in ml
M is the original mass of sample in g

If dilution was required then this also needs to be taken into account by multiplication of C by the dilution factor.

***DSC analysts***

The melting points ($T_m$) were determined on a DSC200 TA instrument, by placing a 5-7 mg polymer sample, into a closed DSC aluminum pan, heating the sample from - 10 ˚C to 210 ˚C at 10 ˚C/min, holding for 5 min at 210 ˚C, cooling from 210 ˚C to - 10 ˚C, holding for 5 min at -10 ˚C, heating from -10 ˚C to 210 ˚C at 10 ˚C/min. The reported values are those determined from the second heating scan.

**Xylene Soluble:**

Determination of xylene soluble fraction (XS):

2.0 g of polymer is dissolved in 250 ml p-xylene at 135 ˚C under agitation. After 30 minutes the solution is allowed to cool for 15 minutes at ambient temperature and then allowed to settle for 30 minutes at 25 ˚C. The solution is filtered with filter paper into two 100 ml flasks.

The solution from the first 100 ml vessel is evaporated in nitrogen flow and the residue is dried under vacuum at 90 ˚C until constant weight is reached.

XS% = (100·m·Vo)/(mo·v); mo = initial polymer amount (g); m = weight of residue (g); Vo = initial volume (ml); v = volume of analysed sample (ml).

**Stepwise Isothermal Segregation Technique (SIST)**

The isothermal crystallisation for SIST analysis was performed in a Mettler TA 820 DSC on 3±0.5 mg samples at decreasing temperatures between 200˚C and 105˚C.

(i) the samples were melted at 225˚C for 5 min.,
(ii) then cooled with 80 C/min to 145˚C
(iii) held for 2 hours at 145˚C,
(iv) then cooled with 80 C/min to 135˚C

(v) held for 2 hours at 135˚C,
(vi) then cooled with 80 C/min to 125˚C
(vii) held for 2 hours at 125˚C,
(viii) then cooled with 80 C/min to 115˚C
(ix) held for 2 hours at 115˚C,
(x) then cooled with 80 C/min to 105˚C
(xi) held for 2 hours at 105˚C.

After the last step the sample was cooled down with 80˚C/min to -10˚C and the melting curve was obtained by heating the cooled sample at a heating rate of 10˚C/min up to 200˚C. All measurements were performed in a nitrogen atmosphere. The melt enthalpy is recorded as function of temperature and evaluated through measuring the melt enthalpy of fractions melting within temperature intervals of 10˚C in the range from 50 to 200˚C.

The lamellar thickness for each peak temperature is calculated according to the Thompson-Gibbs equation:

$$T_m = T^\circ_m(1 - 2\sigma_e / \Delta H^\circ_m L_c)$$

Where the equilibrium melting point, $T^\circ_m$, the specific surface energy, $\sigma_e$, and enthalpy of melting, $\Delta H^\circ_m$, are constants, $L_c$ is the lamellar thickness and $T_m$ is the melting temperature of the lamellae. Values of constants used are:

| | |
|---|---|
| $T^\circ_m$/K | 457 |
| $\sigma_e$/J/m$^2$ | 49.6x10$^{-3}$ |
| $\Delta H^\circ_m$/J/m$^3$ | 134 x 10$^6$ |

Using the above values, the lamellar thickness for PP will be:

$$L_c = 2\sigma_e T^\circ_m / \Delta H^\circ_m(T^\circ_m - T_m) = 0.74 \text{ x } 457 / (457 - T_m)$$

Melting temperature is given in Kelvin and the unit for lamellar thickness is nm. The amount of a certain lamella thickness range is obtained as follows:

$$\text{Fraction (\%)} = (\Delta H \text{ (for a given T range)} / \text{total } \Delta H) \text{ x } 100$$

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 230˚C and may be determined at different loadings such as 2.16 kg ($MFR_2$) or 21.6 kg ($MFR_{21}$).

**GPC:** Molecular weight averages, molecular weight distribution, and polydispersity index (Mn, Mw, MWD)

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A Waters GPCV2000 instrument, equipped with differential refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert butyl-4-methylphenol) as solvent at 140 ˚C and at a constant flow rate of 1 mL/min. 209.5 µL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants for PS, PE and PP used are as per ASTM D 6474-99. All samples were prepared by dissolving 0.5 - 4.0 mg of polymer in 4 mL (at 140 ˚C) of stabilized TCB (same as mobile phase) and keeping for max. 3 hours at max. 160˚C with continuous gentle shaking prior sampling into the GPC instrument.

## Catalyst Activity

The catalyst activity was calculated on the basis of following formula:

$$\text{Catalyst Activity (kg/g*h)} = \frac{\text{amount of polymer produced (kg)}}{\text{catalyst loading (g)} \times \text{polymerisation time (h)}}$$

## $^{13}C$ NMR analysis

Quantitative solution state $^{13}C\{^{1}H\}$ nuclear magnetic resonance (NMR) spectra were recorded using a Bruker Avance III 400 NMR spectrometer with a 9.4 T superconducting standard-bore magnet operating at 400.15 and 100.62 MHz for $^{1}H$ and $^{13}C$ respectively. Approximately 200 mg of material and 0.5 mg of stabiliser (e.g. BHT) were dissolved in approximately 3 ml of 1,1,2,2-tetrachloroethane-$d_2$ (TCE-$d_2$) inside a 10 mm NMR tube. The measurements were done at 125 °C using a $^{13}C$ optimised 10 mm selective excitation probehead with nitrogen gas for all pneumatics. The data was acquired with standard 90° single-pulse excitation with NOE and bi-level WALTZ16 decoupling scheme. A total of 6144 (6k) transients were acquired per spectra using a recycle delay of 3 seconds and an acquisition time of 1.6 seconds.

The tacticity distribution at the pentad level and regioerrors were determined from the quantitative $^{13}C\{^{1}H\}$ NMR spectra after basic assignment as in: V. Busico and R. Cipullo, Progress in Polymer Science, 2001, 26, 443-533, and based on the method described in: C. De Rosa, F. Auriemma, M. Paolillo, L. Resconi, I. Camurati, Macromolecules 2005, 38(22), 9143-9154.

Quantification of the pentad distribution was done through integration of the methyl region in the $^{13}C\{^{1}H\}$ spectra and when applicable corrected for any sites not related to the stereo sequences of interest, e. g. regio errors.

The type of regioerrors (erythro or threo) arising from 2,1 propylene insertions in the chain and their amounts were calculated as follows:

The amount of 2,1-erythro regioerrors (2,1-E) was calculated by using the arithmetic average of the integrated areas from 17.0-17.4 ppm and 17.4-17.8 ppm divided by the sum of integrated areas of all the $CH_3$ signals. The amount of 2,1-threo regioerrors (2,1-T) was calculated using the arithmetic average of the integrated areas from 14.55-14.05 ppm and 15.05-15.55 ppm divided by the sum of integrated areas of all the $CH_3$ signals. The amount of 3,1 misinsertions (3,1) was calculated using half of the arithmetic average of the integrated areas from 27.25-27.85 ppm and 37.15-37.75 ppm divided by the sum of integrated areas of all the $CH_3$ signals.

## Examples

### General procedures and starting materials

All manipulations with air and moisture sensitive compounds were performed either in an atmosphere of thoroughly purified argon using a standard Schlenk technique or in an argon (4.8) filled glove box from MBraun. If not otherwise mentioned all chemicals used are commercially available, purchased from Aldrich, Acros, ABCR or VWR, and used without further purification. All deuterated solvents for NMR measurements were obtained from Deutero. Dry solvents like toluene, diethyl ether, tetrahydrofurane, n-pentane and dichloromethane are taken of a solvent purification system (SPS 800) of MBraun. Dioxane and n-hexane have been dried by filtration over $Al_2O_3$ and stored over molecular sieve 3 Å. Ethanol was dried and stored over molecular sieve 3 Å. $Pd(PPh_3)_4$ was synthesized as published in Coulson, D. R. Inorg. Synth. 1972, 13, 121 - 124., and $[CPh_3][B(C_6F_5)_4]$ as published in Chien, J. C. W.; Tsai, W.-M.; Rausch, M. D. J. Am. Chem. Soc. 1991, 113, 8570

Methylalumoxane (MAO) was a commercial 30%wt solution in toluene from Albemarle.

The metallocene rac-dimethylsilanediylbis[2-methyl-4-phenyl)-indenyl]zirconium dichloride (2-Zr) was a commercial sample from Catalytica Advanced Technologies and used as received as comparative metallocene.

**Ligand synthesis and complex formation**

**Experimental details**

***Metallocene Synthesis***

**Synthesis of 4-Bromophenyl methacrylate.**

56.29 g of 4-Bromophenol (325.4 mmol) was dissolved in a mixture of 400 mL DCM and 25.74 g of pyridine (325.4 mmol). The solution was cooled to - 20 ˚C and 34.02 g of methacryloylchloride (325.4 mmol) was added dropwise. After complete addition the resulting suspension was stirred at reflux for 2 h. The mixture was extracted with water, aqueous sodium hydroxide, again with water and saturated sodium chloride solution. The organic phase was dried over sodium sulfate and the solvent was removed in vacuum. After fractional distillation a colorless oil was obtained, bp 88 ˚C/ 0.1 mbar. Yield: 51.78 g (66 %). Anal. Calcd for $C_{10}H_9BrO_2$: C, 49.82; H, 3.76. Found: C, 49.93; H, 3.71. $^1H$ NMR ($CD_2Cl_2$): δ 7.53 (m, 2H, H-Ar), 7.04 (m, 2H, H-Ar), 6.33 (m, 1H, $=CH_2$), 5.78 (m, 1H, $=CH_2$), 2.04 (m, 3H, $CH_3$). $^{13}C$ {1H} NMR ($CD_2Cl_2$): δ 165.83, 150.49, 136.09, 132.76, 127.75, 123.94, 119.01, 18.48.

**Synthesis of 4-Bromo-7-hydroxy-2-methylindanone.**

39.33 g of 4-Bromophenyl methacrylate (163.1 mmol) was placed in a flask together with 54.38 g of powdered $AlCl_3$ (407.8 mmol). The mixture was heated stepwise to 120 ˚C during 1 h. The formed black solid was dissolved in DCM and poured in ice water. The resulting solid was dissolved by adding 15 mL conc. $H_2SO_4$. The organic phase was separated and the aqueous phase was extracted with DCM. The combined organic phases were washed with water and saturated sodium chloride solution, dried over sodium sulfate and the solvent was removed in vacuum. After fractional distillation a yellow oil was obtained, bp 105 ˚C/ 0.1 mbar. Yield: 20.87 g (53 %). Anal. Calcd for $C_{10}H_9BrO_2$: C, 49.82; H, 3.76; Found: C, 49.76; H, 3.71. $^1H$ NMR ($CD_2Cl_2$): δ 8.97 (s, 1H, OH), 7.58 (d, J = 8.6 Hz, 1H, H-Ar), 6.70 (d, J = 8.6 Hz, 1H, H-Ar), 3.30 (m, 1H, $CH_2$), 2.81 (m, 1H, CH), 2.62 (m, 1H, $CH_2$), 1.31 (d, J = 7.5 Hz, 3H, $CH_3$). $^{13}C\{^1H\}$ NMR ($CD_2Cl_2$): δ 212.35, 157.04, 153.32, 140.16, 123.61, 116.26, 110.37, 42.23, 36.42, 16.06.

**Synthesis of 4-Bromo-7-methoxy-2-methylindanone**.

To a solution of 11.69 g 4-Bromo-7-hydroxy-2-methylindanone (48.5 mmol) in 60 ml ethanol a solution of 3.70 g NaOEt (54.4 mmol) in 60 ml ethanol was added After addition of 7.72 g of methyliodide (54.4 mmol) the mixture was stirred for 2.5 h at 85 ˚C and over night at room temperature. Subsequently 100 ml $H_2O$ was added and the mixture was extracted several times with $Et_2O$. The combined organic phases were washed with saturated sodium chloride solution, dried over sodium sulfate and evaporated to dryness in order to isolate a white solid. Yield 10.83 g (62 %). Anal. Calcd for $C_{11}H_{11}BrO_2$: C, 51.79; H, 4.35. Found: C, 51.27; H, 4.43. $^1H$ NMR ($CDCl_3$): δ 7.65 (d, J = 8.7 Hz, 1H, H-Ar), 6.73 (d, J = 8.7 Hz, 1H, H-Ar), 3.94 (s, 3H, $OCH_3$), 3.27 (m, 1H, $CH_2$), 2.67 (m, 2H, CH, $CH_2$), 1.31 (d, J = 7.3 Hz, 3H, $CH_3$). $^{13}C\{^1H\}$ NMR ($CDCl_3$): δ 229.53, 181.10, 178.70, 162.18, 149.89, 135.27, 135.08, 79.63, 65.87, 59.50, 39.83.

**Synthesis of 7-Bromo-4-methoxy-2-methylindene.**

3.69 g of 4-Bromo-7-methoxy-2-methylindanone (14.5 mmol) was dissolved in 27 mL THF and added dropwise at -78 ˚C to a suspension of 0.36 g of $LiAlH_4$ (9.5mmol) in 11 mL THF. Afterwards it was warmed to room temperature and stirred over night. Subsequently remaining $LiAlH_4$ was hydrolyzed carefully at 0 ˚C with 40 ml of water and 4 mL conc HCl. The mixture was extracted several times with $Et_2O$. The combined organic phases were washed with saturated sodium chloride solution and dried over sodium sulfate. After evaporation of the solvent the solid was dissolved in 40 mL toluene and 92 mg of p-toluene sulfonic acid was added. The mixture was stirred at reflux for 1 h. The resulting solution was washed with aqueous potassium hydroxide, water and saturated sodium chloride solution and dried over sodium sulfate. Evaporation of the solvent gave a slightly yellow solid. Yield 2.93 g (85 %). Anal. Calcd for $C_{11}H_{11}BrO$: C, 55.25; H, 4.64. Found: C, 55.69; H, 4.99. $^1H$ NMR ($CD_2Cl_2$): δ 7.16 (d, J = 8.6 Hz, 1H, H-Ar), 6.68 (d, J = 8.6 Hz, 1H, H-Ar), 6.63 (m, 1H,=CH), 3.83 (s, 3H, $OCH_3$), 3.28 (s, 2H, $CH_2$), 2.16 (m, 3H, $CH_3$). $^{13}C\{^1H\}$ NMR ($CD_2Cl_2$): δ 151.92, 145.73, 144.97, 135.91, 127.55, 123.57, 111.14, 109.72, 56.00, 45.10, 16.75.

**Synthesis of (3,5-di-*tert*-butylphenyl)boronic acid.**

10.0 g of 1-Bromo-3,5-di-*tert*-butylbenzene (37.1 mmol) in 20 ml THF was added dropwise to a suspension of 1.26 g Mg turnings (51.9 mmol) in 30 ml THF. After complete addition the mixture was stirred at reflux for 2.5 h.

Subsequently the warm *Grignard* solution was transferred *via canula* into a dropping funnel and added dropwise to a solution of 5.77 g trimethyl borate (55.6 mmol) in 100 mL $Et_2O$.

During the addition the temperature was kept below - 60 ˚C. After complete addition the mixture was warmed to room temperature and stirred over night. The reaction was quenched by adding 55.8 ml $H_2O$ and 5.6 mL conc. HCl. The organic phase was separated and the aqueous phase was extracted several times with $Et_2O$. The combined organic phases were washed with saturated sodium chloride solution and dried over sodium sulfate. Evaporation of the solvent gave a white solid. Yield 7.59 g (88 %). The boronic acid was obtained as a mixture of monomers and oligomers and used without further purification.

**Synthesis of 7-(3,5-di-*tert*-butylphenyl)-4-methoxy-2-methylindene, 4-(3,5-di-*tert*-butylphenyl)-7-methoxy-2-methylindene.**

0.72 g of 7-Bromo-4-methoxy-2-methylindene (3.0 mmol) and 0.42 g of $Pd(PPh_3)_4$ (0.36 mmol) were dissolved in 18 mL toluene. 7.5 mL of a 2 N sodium carbonate solution (7.5 mmol) and 0.77 g of 3,5-di-*tert*-butylphenylboronic acid in 5 mL EtOH were added in one portion. The mixture was stirred at reflux for 3 d. Afterwards the mixture was neutralized with aqueous $NH_4Cl$ solution and extracted several times with toluene. The combined organic phases were washed with saturated sodium chloride solution and dried over sodium sulfate. Evaporation of the solvent and subsequent column chromatography (hexane/ethylacetate) gave a white solid. Yield 0.85 g (82 %). Anal. Calcd for $C_{25}H_{32}O$: C, 86.15; H, 9.25. Found: C, 83.95; H, 9.13. Mixture of Isomers: Isomer 1:$^1$H NMR ($CDCl_3$): δ 7.39 (t, *J* = 1.8 Hz, 1H, H-Ar-4'), 7.34 (d, *J* = 1.8 Hz, 2H, H-Ar-2',H-Ar-6'), 7.14 (d, *J* = 8.3 Hz 1H, H-Ar), 6.87 (d, *J* = 8.3 Hz 1H, H-Ar), 6.70 (m, 1H,=CH), 3.91 (s, 3H, $OCH_3$), 3.40 (s, 2H, $CH_2$), 2.14 (m, 3H, $CH_3$), 1.38 (s, 18H, $CMe_3$). $^{13}C\{^1H\}$ NMR ($CDCl_3$): δ 151.59, 150.68, 144.71, 142.85, 140.39, 134.70, 132.11, 125.52, 123.38, 122.94, 120.71, 109.35, 55.74, 43.59, 35.08, 31.71, 16.89.

Isomer 2: $^1$H NMR ($CDCl_3$): δ 7.39 (t, *J* = 1.8 Hz, 1H, H-Ar-4'), 7.32 (d, *J* = 1.8 Hz, 2H, H-Ar-2',H-Ar-6'), 7.29 (d, *J* = 8.4 Hz 1H, H-Ar), 6.77 (d, *J* = 8.4 Hz 1H, H-Ar), 6.62 (m, 1H,=CH), 3.92 (s, 3H, $OCH_3$), 3.34 (s, 2H, $CH_2$), 2.16 (m, 3H, $CH_3$), 1.37 (s, 18H, $CMe_3$). $^{13}C\{^1H\}$ NMR (CDCl3): δ 154.23, 150.67, 146.85, 145.32, 140.11, 130.30, 129.01, 128.49, 126.50, 123.41, 120.44, 106.87, 55.47, 40.55, 35.05, 31.71, 17.08.

**Synthesis of bis[4-(3,5-di-*tert*-butylphenyl)-7-methoxy-2-methylindene]dimethylsilane.**

1.87 g of 4-(3,5-di-*tert*-butylphenyl)-7-methoxy-2-methylindene (5.4 mmol) was dissolved in 50 ml toluene/dioxane (1:1). 2.22 mL of 2.43 M n-BuLi in hexane (5.4 mmol) was added at - 20 ˚C. The solution was warmed to room temperature and stirred for 2 h. The resulting yellow solution was cooled to -20 ˚C and 0.35 g of Dichlorodimethylsilane (2.7 mmol) was added. After complete addition the mixture was stirred at 60 ˚C over night. Diethylether was added to the yellow suspension. The organic phase was washed with water, saturated sodium chloride solution and dried over sodium sulfate. Evaporation of the solvent, followed by column chromatography (hexane/ethylacetate) and recrystallization in methanol gave a white solid. Yield 0.72 g (36 %). Anal. Calcd for $C_{52}H_{68}O_2Si$: C, 82.92; H, 9.10. Found: C, 82.61; H, 8.89. $^1$H NMR ($CDCl_3$): δ 7.36 (m, 6H, H-Ar'), 7.25 (d, *J* = 7.9 Hz, 2H, H-Ar), 6.74 (m, 4H, H-Ar, =CH), 4.22, 4.04 (2s, 2H, CH), 3.91, 3.84 (2 s, 6H, $OCH_3$), 2.28, 2.15 (2s, 6H, $CH_3$), 1.39, 1.38 (2s, 36H, $CMe_3$) 0.19, 0.26, 0.35 (3s, 6H, $SiMe_2$). $^{13}C\{^1H\}$ NMR ($CDCl_3$): δ 153.54, 150.57, 149.43, 144.38, 140.50, 133.50, 128.85, 126.84, 125.26, 123.41, 120.31, 105.27, 54.80, 47.07, 35.05, 31.72, 17.87, -3.73.

**Synthesis of *rac*-dimethylsilanediylbis[2-methyl-4-(3,5-di-*tert*-butylphenyl)-7-methoxy-indenyl]zirconium dichloride (1-Zr).**

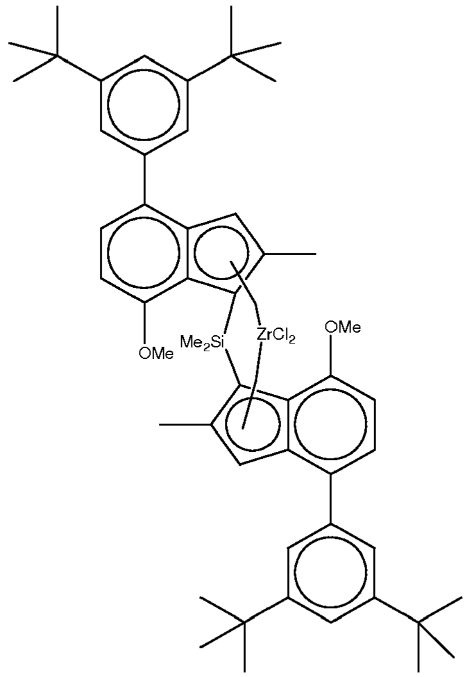

2.37 g of bis[4-(3,5-di-*tert*-butylphenyl)-7-methoxy-2-methylindene]dimethylsilane (3.15 mmol) was dissolved in 110 mL toluene. 2.52 mL of 2.5 M n-BuLi in hexane (6.3 mmol) was added at 0 ˚C. The solution was stirred for 24 h at room temperature. Afterwards the solution was cooled to -78 ˚C and 0.73 g of zirconium tetrachloride (3.14 mmol) was added. The suspension was warmed to room temperature and stirred over night. The red toluene solution was separated from the solid and latter was extracted several times with toluene. The solvent was removed in vacuum and the solid was washed several times with pentane. Crystallization of toluene/pentane gave the pure racemic form of the metallocene as a crystalline orange solid. Yield 0.79 g (27 %). %). Anal. Calcd for $C_{52}H_{66}Cl_2O_2SiZr$: C, 68.38; H, 7.28. Found: C, 68.47; H, 7.42. $^1$H NMR ($CD_2Cl_2$): δ 7.51 (m, 4H, H-Ar'), 7.36 (m, 4H, H-Ar, H-Ar'), 6.95 (s, 2H, CH-indene), 6.45 (d, *J* = 7.9 Hz, 2H, H-Ar), 3.91 (s, 6H, $OCH_3$), 2.17 (s, 6H, $CH_3$), 1.31 (s, 36H, $CMe_3$) 1.22 (s, 6H, $SiMe_2$). $^{13}$C{1H} NMR ($CD_2Cl_2$): δ 155.79, 151.49, 139.05, 135.40, 133.47, 131.79, 128.01, 123.70, 123.66, 121.87, 121.19, 103.50, 84.08, 54.34, 35.36, 31.65, 17.72, 6.12. The crystal structure of this complex is shown in Figure 2.

**Synthesis of *rac*-dimethylsilanediylbis[2-methyl-4-(3,5-di-*tert*-butylphenyl)-7-methoxy-indenyl]hafnium dichloride (1-Hf).**

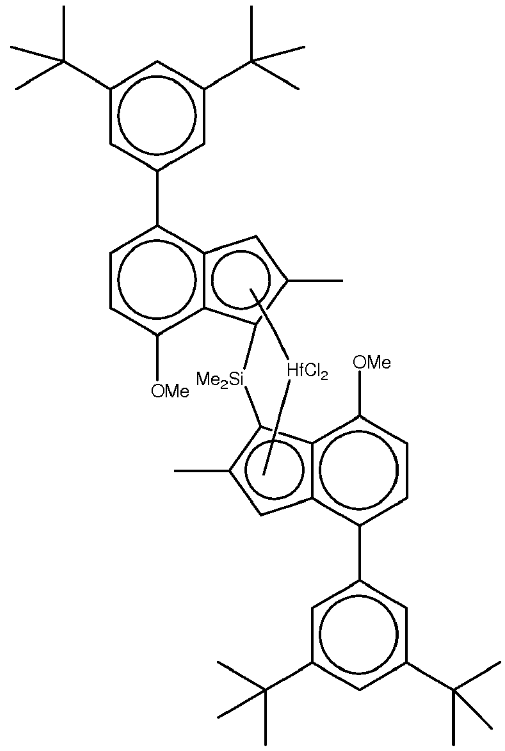

0.22 g of bis[4-(3,5-di-*tert*-butylphenyl)-7-methoxy-2-methylindene]dimethylsilane (0.29 mmol) was dissolved in 10 mL toluene. 0.23 mL of 2.55 M n-BuLi in hexane (0.58 mmol) was added at -78 ˚C. The solution was stirred for 4 h at room temperature. Afterwards the solution was cooled to -78 ˚C and 0.093 g of hafnium tetrachloride (0.29 mmol) was added. The suspension was warmed to room temperature and stirred over night. The brown toluene solution was separated from the solid and latter was extracted several times with toluene. The solvent was removed in vacuum and the solid was washed several times with pentane and a mixture of toluene and hexane. Drying in vacuum gave the pure racemic form of the hafnocene as a yellow powder. Yield 0.04 g (14 %). Anal. Calcd for $C_{52}H_{66}Cl_2HfO_2Si$: C, 62.42; H, 6.65. Found: C, 62.73; H, 6.77. $^1$H NMR ($CDCl_3$): δ 7.94 (m, 4H, H-Ar'), 7.63 (m, 2H, H-Ar'), 7.37 (2H, CH-indene), 6.41 (d, *J* = 7.9 Hz, 2H, H-Ar), 3.92 (s, 6H, $OCH_3$), 2.27 (s, 6H, $CH_3$), 1.30 (s, 36H, $CMe_3$) 1.20 (s, 6H, $SiMe_2$). $^{13}C\{^1H\}$ NMR ($CD_6$): δ 155.40, 151.37, 140.13, 133.49, 132.29, 132.07, 128.35, 124.29, 122.56, 120.98, 120.20, 103.20, 84.81, 53.27, 35.38, 31.90, 17.42, 5.97.

**Comparative Example:**

**Synthesis of rac-dimethylsilanediylbis[2-methyl-4-(3,5-di-tert-butylphenyl)-indenyl]hafnium dichloride (2-Hf) (analogue of the zirconocene described in WO-2002/02576 of Exxon)**

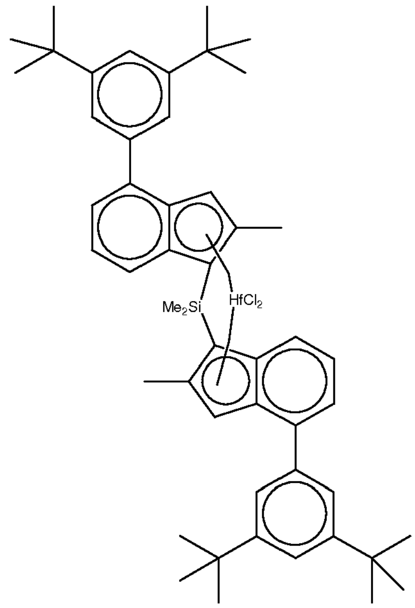

**Synthesis of 4-Bromo-2-methylindanone**

This synthesis was performed as described in Organometallics 2006, 25, 1217 supplementary material.

**Synthesis of 7-Bromo-2-methylindene.**

5.57 g of 4-Bromo-2-methylindanone (24.7 mmol) was dissolved in 45 mL of THF and added dropwise at -78 °C to a suspension of 0.56 g of $LiAlH_4$ (14.8 mmol) in 18 mL THF. Afterwards it was warmed to room temperature and stirred over night. Subsequently remaining $LiAlH_4$ was hydrolyzed carefully at 0 °C with 60 ml of water and 6 mL conc HCl. The mixture was extracted several times with $Et_2O$. The combined organic phases were washed with saturated sodium chloride solution and dried over sodium sulfate. After evaporation of the solvent the solid was dissolved in 60 mL toluene and 150 mg of p-toluene sulfonic acid was added. The mixture was stirred at reflux for 1 h. The resulting solution was washed with water, aqueous potassium hydroxide, water and saturated sodium chloride solution and dried over sodium sulfate. Evaporation of the solvent gave a slightly yellow solid. Yield 3.61 g (85 %). $^1H$ NMR ($CDCl_3$): δ 7.22 (m, 1H, H-Ar), 7.18 (d, *J* = 7.2 Hz, 1H, H-Ar), 7.10 (d, J = 7.6 Hz, 1H, H-Ar), 6.51 (m, 1H,=CH), 3.29 (s, 2H, $CH_2$), 2.17 (s, 3H, $CH_3$).

**Synthesis of 7-(3,5-di-*tert*-butylphenyl)-2-methylindene, 4-(3,5-di-*tert*-butylphenyl)-2-methylindene.**

3.61 g of 7-Bromo-2-methylindene (17.3 mmol) and 2.40 g of $Pd(PPh_3)_4$ (2.08 mmol) were dissolved in 90 mL toluene. 43.25 mL of a 2 N sodium carbonate solution (43.25 mmol) and 4.45 g of 3,5-di-*tert*-butylphenyl)boronic acid in 23 mL EtOH were added in one portion. The mixture was stirred at reflux for 3 d. Afterwards the mixture was neutralized with aqueous $NH_4Cl$ solution and extracted several times with toluene. The combined organic phases were washed with saturated sodium chloride solution and dried over sodium sulfate. Filtration over silica and evaporation of the solvent gave the crude product. Suspension in MeOH and filtration gave a white solid. Yield 4.58 g (83 %). Mixture of two isomers: $^1H$ NMR ($CD_2Cl_2$): δ 7.43 (t, *J* = 1.8 Hz, 2x1H, H-Ar-4'), 7.38 (d, *J* = 1.8 Hz, 2H, H-Ar-2',H-Ar-6'), 7.33 (d, *J* = 1.8 Hz, 2H, H-Ar-2',H-Ar-6'), 7.30 (d, *J* = 7.4 Hz 1H, H-Ar), 7.27 (d, *J* = 7.4 Hz 1H, H-Ar), 7.22 (m, 2x1H, H-Ar), 7.12 (m, 2x1H, H-Ar), 6.64 (m, 1H,=CH), 6.54 (m, 1H,=CH), 3.38 (s, 2x2H, $CH_2$), 2.15 (s, 2x3H, $CH_3$), 1.37 (s, 2x18H, $CMe_3$).

**Synthesis of bis[4-(3,5-di-*tert*-butylphenyl)-2-methylindene]dimethylsilane.**

**4.15** g of 4-(3,5-di-tert-butylphenyl)-2-methylindene (12.4 mmol) was dissolved in 100 ml toluene/dioxane (1: 1). 4.96 mL of 2.5 M n-BuLi in hexane (12.4 mmol) was added at 0 °C. The solution was warmed to room temperature and stirred for 2 h. The resulting yellow solution was cooled to 0 °C and 0.80 g of dichlorodimethylsilane (6.2 mmol) was added. After complete addition the mixture was stirred at rt over night. Diethylether was added to the yellow suspension. The organic phase was washed with water, saturated sodium chloride solution and dried over sodium sulfate. Evaporation of the solvent, followed by column chromatography (hexane/ethylacetate) and recrystallization in methanol gave a white

solid. Yield 0.9 g (21 %). Mixture of two isomers: $^1H$ NMR ($CD_2Cl_2$): δ 7.52-7.19 (m, 12H, H-Ar', H-Ar), 6.83 (m, 2H, =CH), 3.89, 3.86 (2s, 2H, CH), 2.28 (s, 6H, $CH_3$), 1.41 (s, 36H, $CMe_3$) -0.15, -0.19, -0.21 (3s, 6H, $SiMe_2$).

**Synthesis of *rac*-dimethylsilanediylbis[2-methyl-4-(3,5-di-*tert*-butylphenyl)-indenyl]hafnium dichloride (2-Hf)**.

0.684 g of bis[4-(3,5-di-*tert*-butylphenyl)-2-methylindene]dimethylsilane (0.99 mmol) was dissolved in 7 mL THF and 1 mL n-pentane. 0.81 mL of 2.5 M n-BuLi in hexane (2.01 mmol) was added at -78 ˚C. The solution was warmed to - 60 ˚C during 30 minutes and afterwards stirred for 1 h at rt. The solvent was removed, 3 mL of toluene were added and again removed. The residue was dissolved in 8 mL of toluene. Afterwards the solution was cooled to -85 ˚C and 0.317 g of hafnium tetrachloride (0.99 mmol) was added. The suspension was warmed to room temperature within 2 h and refluxed for further 6 h. Toluene was removed and the yellow residue was stirred over night in 10 ml of n-pentane. The yellow solution was separated from the yellow residue, which was again extracted with further 6 mL of n-pentane. The combined n-pentane solutions were reduced and the pure racemic form of the complex could be obtained as a yellow powder. Yield 0.363 g (39 %). $^1H$ NMR ($C_6D_6$): δ 7.89 (d, J=1.8 Hz, 4H, H-Ar'), 7.63 (m, 2H, H-Ar'), 7.50 (d, J=8.7 Hz, 2H, H-Ar), 7.43 (d, J=6.5 Hz, 2H, H-Ar), 7.04 (s, 2H, CH-indene), 6.88 (m, 2H, H-Ar), 2.12 (s, 6H, Me-indene), 1.43 (s, 36H, $CMe_3$), 0.81 (s, 6H, $SiMe_2$).

**Catalyst Formation**

**MAO activated catalysts:**

The catalyst was prepared according to the procedure described in the Example 5 of WO 2003/051934 with hexadecafluoro-1,3-dimethylcyclohexane as the immiscible solvent, a mixture of perfluoroalkylethyl acrylate esters having different perfluoroalkyl chain lengths as the surfactant precursor.

The detailed catalyst preparation was performed as follows:

Inside a glovebox, 80 μL of a commercial mixture of dry and degassed perfluoroalkylethyl acrylate esters were mixed with 2 mL of MAO in a septum bottle and left to react overnight (surfactant solution). The following day, the required amount of the metallocene (inventive metallocenes 1-Zr and 1-Hf, and comparative metallocene 2-Zr, amounts shown in table 1) were dissolved in 4 mL of the MAO solution in another septum bottle and left to stir inside the glovebox (catalyst solution).

After 60 minutes, the 4 mL of the catalyst solution and 1 mL of the surfactant solution were successively added into a 50mL emulsification glass reactor containing 40mL of hexadecafluoro-1,3-dimethylcyclohexane at -10 ˚C and equipped with an overhead stirrer (stirring speed = 600 rpm). A red-orange emulsion formed immediately and was stirred during 15 minutes at 0 ˚C / 600rpm. The emulsion was then transferred via a 2/4 Teflon tube to 100mL of hot hexadecafluoro-1,3-dimethylcyclohexane at 90 ˚C, and stirred at 600 rpm until the transfer was completed. The stirring speed was reduced to 300 rpm and the oil bath was removed. Stirring was continued at room temperature for 15 more minutes. When the stirrer was switched off, the catalyst was left to settle up on top of the continuous phase which was siphoned off after 45 minutes. The remaining red solid catalyst was dried during 2 hours at 50 ˚C over an argon flow.

Table 1: catalyst composition and preparation

| catalyst | metallocene | mg | Metal, wt % | Al/Metal molar ratio |
|---|---|---|---|---|
| 1 | 1-Zr | 69.4 | 0.29 | 276 |
| 2 | 1-Hf | 76.0 | 0.68 | 277 |
| 3* | 2-Zr | 47.8 | 0.38 | 227 |
| * Comparative catalyst. 2-Zr is metallocene rac-dimethylsilanediylbis [2-methyl-4-phenyl)-indenyl]zirconium dichloride as described in starting materials. | | | | |

**Catalyst prepolymerization (catalyst 1p)**

Off-line pre-polymerisation of catalyst 1 (1-Zr) was done in a 125 mL pressure reactor equipped with gas-feeding lines and an overhead stirrer. Dry and degassed perfluoro-1,3-dimethylcyclohexane (15 cm3) and 579 mg of the red catalyst to be pre-polymerised were loaded into the reactor inside a glovebox and the reactor was sealed. The

reactor was then taken out from the glovebox and placed inside a water cooled bath at 25°C. The overhead stirrer and the feeding lines were then connected. The feeding line was pressurized with hydrogen, and the experiment was started by opening the valve between the H2 feed line and the reactor. At the same time propylene feed was started through the same H2 feeding line in order to ensure that all the hydrogen would be fed into the reactor. The propylene feed was left open, and the monomer consumption was compensated by keeping the total pressure in the reactor constant (5 barg). The experiment was continued for 22 min until a degree of polymerisation of 1.1 g/g was reached. The reactor was then taken back inside the glovebox before opening and the content was poured into a glass vessel. The perfluoro-1,3-dimethylcyclohexane was evaporated until a constant weight was obtained to yield a pre-polymerised pink catalyst. The degree of prepolymerisation was determined gravimetrically.

**Examples 1-8 and Comparative Examples 1- 4**

**Polymerizations in toluene:**

Polymerization reactions were performed in a 1-L Büchi steel autoclave at constant pressure and temperature. For drying the autoclave it was charged with 300 ml toluene and 3 mL of a 1.1 M TIBA solution in toluene and stirred for 1 h at 90 °C.

For polymerizations the autoclave was charged with 280 mL toluene and 1 mL (or 2 mL) of a 1.1 M TIBA solution in toluene. For preactivation the metallocene (comparative metallocene 2-Hf, inventive metallocenes 1-Hf and 1-Zr, amounts in Tables 2a and 2c) were dissolved in 10 mL of toluene, 200 eq of TIBA were added and subsequently the mixture was stirred for 1 h at 60 °C. The preactivated complex solution was added via syringe into the autoclave followed by adjustment of the desired temperature and propylene pressure. The polymerization was started by adding the Trityl tetrakis(pentafluorophenyl)borate solution (9.2 mg in 10 mL toluene, 5 eq) via pressure burette into the autoclave. The propene consumption was measured with a gas flow meter (Bronkhorst F-111C-HA-33P), pressure (Bronkhorst pressure controller P-602C-FAC-33P) and temperature (Thermo Scientific HAAKE DynaMax) were kept constant during the entire polymerization procedure. Pressure, temperature ($T_p$) and propene consumption were also monitored and recorded online during the whole polymerization process. Polymerization reactions were quenched with methanol. Subsequently the autoclave content was poured into acidified methanol. The polymer was filtered off, washed exhaustively with methanol and dried in vacuum at 80 °C for several hours.

The results are summarized in Tables 2a - 2d.

Table 2a - Non supported Borate activated, comparison examples 1-4: polymerization results

| Example | metallocene | μmol | Polym. time min | P bar | $T_p$ °C | Activity Kg/ g(metallocene)/h |
|---|---|---|---|---|---|---|
| **Comp 1** | **2-Hf** | 4 | 60 | 3 | 0 | 2 |
| **Comp 2** | **2-Hf** | 1 | 23 | 4 | 30 | 19.1 |
| **Comp 3** | **2-Hf** | 1 | 32 | 4 | 50 | 22.8 |
| **Comp 4** | **2-Hf** | 1 | 6 | 4 | 70 | 101 |

Table 2b: Non supported Borate activated, comparison examples: polymer characterization

| Example | metallocene | Mw kg/mol | PDI | $T_m$ °C |
|---|---|---|---|---|
| **Comp** 1 | **2-Hf** | 2300 | 1.5 | 169 |
| **Comp 2** | **2-Hf** | 2 100 | 3.1 | 167 |
| **Comp 3** | **2-Hf** | 800 | 1.7 | 164 |
| **Comp 4** | **2-Hf** | 230 | 1.4 | 157 |

Table 2c: Non supported Borate activated, inventive examples 1-8: polymerization results

| Example | metallocene | μmol | Polym. time min | P bar | $T_p$ ˚C | Activity Kg/ g(metallocene)/h |
|---|---|---|---|---|---|---|
| 1 | **1-Hf** | 2 | 129 | 3 | 0 | 1.8 |
| 2 | **1-Hf** | 2 | 16 | 4 | 30 | 27 |
| 3 | **1-Hf** | 2 | 33 | 4 | 50 | 17 |
| 4 | **1-Hf** | 2 | 21 | 4 | 70 | 33 |
| 5 | **1-Hf** | 2 | 20 | 6 | 70 | 54 |
| 6 | **1-Zr** | 2 | 3 | 4 | 30 | 66.8 |
| 7 | **1-Zr** | 1 | 10 | 4 | 50 | 112.8 |
| 8 | **1-Zr** | 1 | 12 | 6 | 70 | 141.2 |

Table 2d: Non supported Borate activated, inventive examples: polymer characterization

| Example | Cat. | Mw kg/mol | PDI | mmmm % | 2,1 e % | 3,1 % | $T_m$ ˚C | Tc ˚C |
|---|---|---|---|---|---|---|---|---|
| 1 | **1-Hf** | 5800 | 1.2 | 99.9 | 0 | 0 | 171 | 120 |
| 2 | **1-Hf** | 1700 | 1.5 | 99.5 | 0 | 0 | 170 | 115 |
| 3 | **1-Hf** | 1100 | 1.6 | 99.3 | 0.06 | 0.02 | 165 | 111 |
| 4 | **1-Hf** | 410 | 1.5 | 98.4 | 0.04 | 0.06 | 160 | 114 |
| 5 | **1-Hf** | 600 | 1.5 | 99.0 | 0.04 | 0.03 | 166 | 112 |
| 6 | **1-Zr** | 700 | 1.6 | 99.6 | 0.09 | 0 | 165 | 113 |
| 7 | **1-Zr** | 480 | 1.7 | | | | 163 | 108 |
| 8 | **1-Zr** | 400 | 2.0 | 99.0 | 0.23 | 0.04 | 158 | 111 |

One can see that the $T_m$, although decreasing with increasing $T_p$, remains always at high values. A higher pressure (higher propylene concentration) leads also to higher $T_m$. Activities of 1-Zr are higher than activities from 1-Hf; melting points of iPP from 1-Zr are lower than those from 1-Hf, but still high compared to metallocene catalysts known in the art.

**Examples 9 - 15 and Comparative Examples 5 -7**

**Polymerisations in liquid propylene**

The polymerisations were performed in a 5 L reactor. 200 μl of triethylaluminum was fed as a scavenger in 5 mL of dry and degassed pentane. The desired amount of hydrogen was then loaded (measured in mmol) and 1100 g of liquid propylene was fed into the reactor. The temperature was set to 30 ˚C. The desired amount of catalyst in 5mL of hexadecafluoro-1,3-dimethylcyclohexane was then flushed into the reactor with a nitrogen overpressure and temperature raised to 70 ˚C or to 85 ˚C over a period of 15 minutes. The polymerisation was stopped by venting the reactor and flushing with nitrogen before the polymer was collected. Polymerisation conditions and results are disclosed in Table 3.

**Polymerization results:**

Table 3: polymerization results with inventive cat 1 (1-Zr) and cat 2 (1-Hf) (examples 9 - 15) compared to cat 3 (2-Zr) (C5 - C7)

| Ex | Catalyst | Cat (mg) | $T_p$ ˚C | Time min | $H_2$ mmol | Pol yield g | A Mt kg/gMt /h | $MFR_2$ g/10' | $M_w$ kg/mol | Mw/ Mn | $T_m$ (˚C) | $T_c$ (˚C) |
|---|---|---|---|---|---|---|---|---|---|---|---|---|
| 9 | 1 | 183 | 70 | 30 | 1 | 501 | 1888 | 19 | 347 | 20 | 1594 | 1135 |
| 10 | 1 | 161 | 70 | 30 | 6 | 1204 | 5157 | 190 | 190 | 21 | 1562 | 1138 |
| 11 | 1 | 136 | 70 | 30 | 15 | 1140 | 5781 | 120 | 106 | 22 | 1566 | 1165 |
| 12 | 2 | 294 | 70 | 120 | 6 | 91 | 23 | | | | 1605 | 115 |
| 13 | 2 | 507 | 30 | 120 | 6 | 75 | 11 | | | | 1590 | 119 |
| 14 | 2 | 510 | 30 | 240 | 6 | 125 | 9 | | | | 1592 | 118 |
| 15 | 2 | 533 | 85 | 120 | 6 | 145 | 20 | | | | 1602 | 115 |
| C5 | 3 | 277 | 70 | 30 | 1 | 103 | 1947 | 004 | 760 | 22 | 15310 | 1065 |
| C6 | 3 | 311 | 70 | 30 | 6 | 179 | 3026 | 06 | 465 | 22 | 1499 | 1095 |
| C7 | 3 | 33 3 | 70 | 30 | 15 | 260 | 4688 | 5,7 | | | 1509 | 1097 |

As one can see, the hafnocene of the present invention provides polypropylenes of high melting point even when the polymerization temperature is very high, e.g. 85˚C.

**Examples 16-18 - Polymerisations in liquid propylene with the prepolymerized catalyst 1p.**

A stirred autoclave (double helix stirrer) with a volume of 21.2 $dm^3$ containing ~0.4 bar-g of propylene is filled with additional 5.43 kg propylene. After adding 0.4 NL $H_2$ and 0.97 mmol of triethylaluminium (1 molar solution in hexane) using a stream of 246 g propylene the solution is stirred at 20˚C and 150 rpm. After 20 min the reactor temperature is increased to 40 ˚C and the solid, pre-polymerized catalyst 1p (degree of polymerisation 1.1) is contacted with 5 ml perfluoro-1,3-dimethylcyclohexane under $N_2$-pressure for 60 sec and flushed into the reactor with 246 g propylene. After that the stirring speed is increased to 350 rpm. Hydrogen is added and the reactor is heated to the polymerization temperature. At the end of the polymerization time, the reaction is stopped by adding 5 ml methanol, cooling the reactor and flashing the volatile ingredients.

After purging the reactor 3 times with $N_2$ and one vacuum/$N_2$ cycle the product is taken out and dried over night in a hood and additionally 2 hours in a vacuum drying oven at 60˚C. After weighing the material is additivated with 0.2w% Ionol and 0.1w%PEPQ. Catalyst and hydrogen amounts, polymerization time, polymerization temperature and product yield and properties are listed in table 4.

Table 4: polymerization results with catalyst 1p (examples 16-18)

| Ex | Catalyst (pre-polymerized) | $T_p$ | time | H2 | Polymer | MFR 2 | $T_m$ | $T_c$ | Mw | Mw/Mn | XS |
|---|---|---|---|---|---|---|---|---|---|---|---|
| | mg | ˚C | Min | NL | g | g/10' | ˚C | ˚C | kg/mol | | Wt% |
| 16 | **200** | 70 | 120 | 0.4 | 1412 | 2.4 | 157.6 | 112.9 | 288 | 2.23 | 0.3 |
| 17 | 394 | 50 | 180 | 0.2 | 477 | 1.6 | 156.6 | 113 | 312 | 2.46 | |
| 18 | 346 | 40 | 180 | 0.8 | 620 | 120 | 156.9 | 114.2 | 111 | 3.08 | |
| Polymerization conditions: Propylene 4470 g. TEA 0.73 mL of a 1M heptane solution. Catalyst injection at 40 ˚C. | | | | | | | | | | | |

Results of SIST analysis on sample 1 and a commercial homopolymer (HD601CF from Borealis) are shown in table 5 and figure 1.

Table 5

| | | HD601CF | EXAMPLE 1 |
|---|---|---|---|
| T Range (˚C) | Lc range (nm) | Fraction (%) | Fraction (%) |
| 50 - 60 | 2.52-2.73 | 0.24 | 0.05 |
| 60 - 70 | 2.74-2.97 | 0.41 | 0.16 |
| 70 - 80 | 2.98-3.25 | 0.37 | 0.27 |
| 80 - 90 | 3.26-3.60 | 0.35 | 0.38 |
| 90 - 100 | 3.61 - 4.03 | 0.35 | 0.53 |
| 100 - 110 | 4.04-4.57 | 0.36 | 0.68 |
| 110 - 120 | 4.58-5.28 | 0.66 | 0.98 |
| 120 - 130 | 5.29-6.26 | 1.36 | 1.62 |
| 130 - 140 | 6.27-7.69 | 2.81 | 2.56 |
| 140 - 150 | 7.70-9.95 | 9.32 | 4.24 |
| 150 - 160 | 9.96-14.09 | 23.76 | 9.69 |
| 160 - 170 | 14.10-24.16 | 45.69 | 24.68 |
| 170 - 180 | 24.16-84.55 | 14.32 | 54.14 |

As can be seen, the PP of example 1 has most of its components melting above 170˚C. Those components have a lamella thickness of more than 24 nm.

**DMTA:**

The PP samples have been analyzed using a DMTA test in torsion mode with reduced sample dimension (between 0.1 and 0.3g). The results from the reduced dimension compared well with the results from the standard dimension.

**Sample preparation and test method:**

**Sample preparation:**

Compression molding (on samples stabilized with standard antioxidant) was done in two steps. In the first step thin plaques (~ 0.3mm) were pressed. Then the thin plaques were cut into small pieces (approx. 1x1 mm) and then the frame was filled with the pieces.

1) PC-lab press at 200˚C/2minutes
2) Collin P200M
Dosing: 0.12g
Temp.: 200˚C

A) 240s//8bar//0bar/s
B) 300s//50bar//3bar/s
C) 300s//200bar//10bar/s
D) 780s//200bar//-15K/min//0bar/s

Conditioning: for 96h at room temperature.

**Test method:** DMTA according to ISO 6721-7 Torsion mode

Sample geometry: 30x5x0.6mm
Test setup:

normal force: 20g/+-10
rate: 2K/Min
Initial temp.: -50˚C, End temp.: 165˚C
Strain: 0.15%, 0.5/3s cycle

**Results of the DMTA test**

The table shows the elastic modulus G' measured at two different temperatures from the DMTA curve. While room temperature stiffness (G' at 23˚C) is not improved over the reference polypropylene homopolymer, G' at 120˚C is up to 50% higher than the commercial polypropylene HC600TF used as reference. This indicates a higher thermal stability of the polypropylenes of the present invention.

Table 6

| | G'(23˚C) | G'(120˚C) |
|---|---|---|
| | [MPa] | [MPa] |
| Example 1 | 902 | 195 |
| Example 2 | 886 | 162 |
| Example 5 | 906 | 150 |
| HC600TF | 919 | 131 |

## Claims

**1.** A catalyst comprising a complex of formula (I)

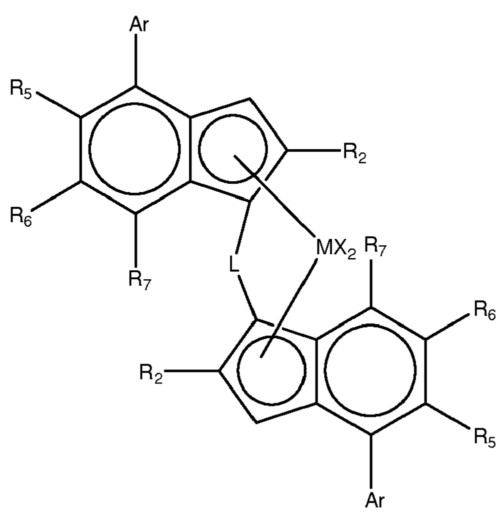

wherein
M is zirconium or hafnium;
each X is a sigma ligand;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, C1-C20-hydrocarbyl, tri(C1-C20-alkyl)silyl, C6-C20-aryl, C7-C20-arylalkyl or C7-C20-alkylaryl;
each $R_2$ is independently a C1-C20 hydrocarbyl radical optionally containing one or more heteroatoms from groups 14-16;
each $R_5$ is independently hydrogen or an aliphatic C1-20 hydrocarbyl group optionally containing one or more heteroatoms from groups 14-16;
each $R_6$ is independently hydrogen or an aliphatic C1-20 hydrocarbyl group optionally containing one or more heteroatoms from groups 14-16; or

an $R_5$ and $R_6$ group on adjacent carbon atoms can be taken together to form a 5 membered saturated carbon ring which is optionally substituted by a group $R_4$;
each $R_7$ is independently an aliphatic C1-20 hydrocarbyl group optionally containing one or more heteroatoms from groups 14-16 with at least 2 non-H atoms;
each Ar group is independently an aryl or heteroaryl group having up to 20 carbon atoms optionally substituted by one or more groups $R_1$;
each $R_1$ is a C1-20 hydrocarbyl group or two $R_1$ groups on adjacent carbon atoms taken together can form a fused 5 or 6 membered non aromatic ring with the Ar group, said ring being itself optionally substituted with one or more groups $R_4$;
each $R_4$ is a C1-20 hydrocarbyl group;
and (ii) a cocatalyst comprising a compound of a group 13 metal, e.g. boron.

**2.** A catalyst as claimed in any preceding claim where said complex is of formula (IIa)

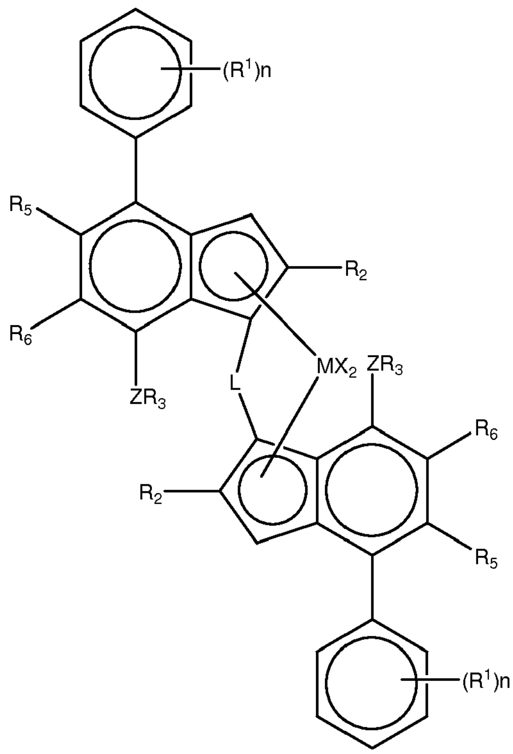

wherein
M is zirconium or hafnium;
each X is a sigma ligand, preferably each X is independently a hydrogen atom, a halogen atom, $C_{1-6}$-alkoxy group, $C_{1-6}$-alkyl, phenyl or benzyl group;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, C1-C20-hydrocarbyl, tri(C1-C20-alkyl)silyl, C6-C20-aryl, C7-C20-arylalkyl or C7-C20-alkylaryl;
each $R_2$ is a C1-10 hydrocarbyl group;
each $R_5$ is hydrogen or a C1-10 alkyl group;
each $R_6$ is hydrogen or a C1-10 alkyl group;
each Z is independently O or S;
each $R_3$ is an aliphatic C1-10-hydrocarbyl group;
n is 1 to 4, e.g. 2;
and each $R^1$ is a C1-20 hydrocarbyl group.

**3.** A catalyst as claimed in any preceding claim where said complex is of formula (IIb).

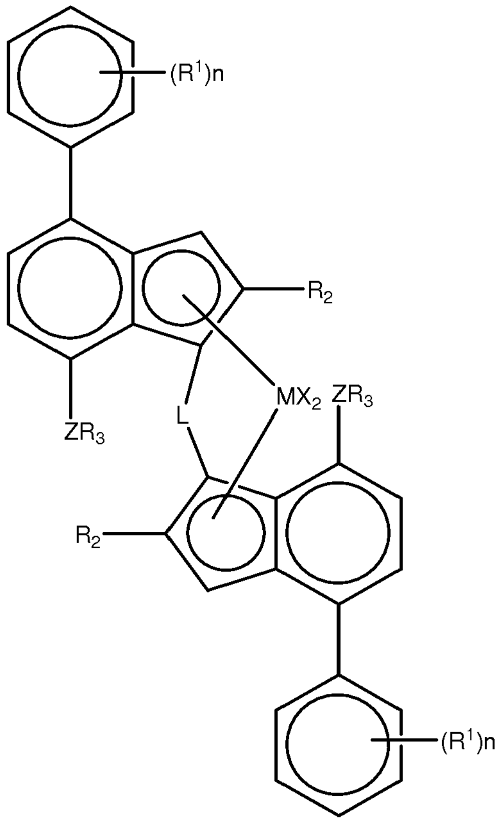

(IIb)

wherein
M is zirconium or hafnium;
each X is a sigma ligand, preferably each X is independently a hydrogen atom, a halogen atom, $C_{1-6}$-alkoxy group, $C_{1-6}$-alkyl, phenyl or benzyl group;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, C1-C20-hydrocarbyl, tri(C1-C20-alkyl)silyl, C6-C20-aryl, C7-C20-arylalkyl or C7-C20-alkylaryl;
$R_2$ is preferably a C1-10 hydrocarbyl group;
each Z is independently O or S;
each $R_3$ is an aliphatic C1-10-hydrocarbyl group;
n is 1 to 4, e.g. 2;
and each $R^1$ is a C1-20 hydrocarbyl group.

**4.** A catalyst as claimed in any preceding claim where said complex is of formula (III):

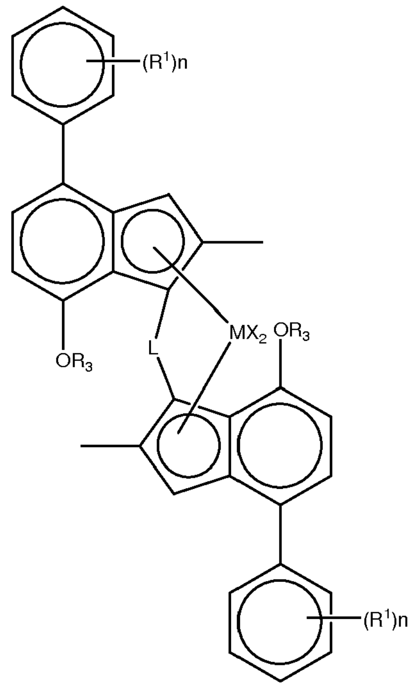

(III)

wherein M is zirconium or hafnium;
each X is a sigma ligand, preferably each X is independently a hydrogen atom, a halogen atom, $C_{1-6}$-alkoxy group, $C_{1-6}$-alkyl, phenyl or benzyl group;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, C1-C20-hydrocarbyl, tri(C1-C20-alkyl)silyl, C6-C20-aryl, C7-C20-arylalkyl or C7-C20-alkylaryl;
each $R_3$ is an aliphatic C1-10-hydrocarbyl group;
n is 1 to 4, e.g. 2;
and each $R^1$ is a C1-20 hydrocarbyl group.

**5.** A catalyst as claimed in any preceding claim where said complex is of formula (IV)

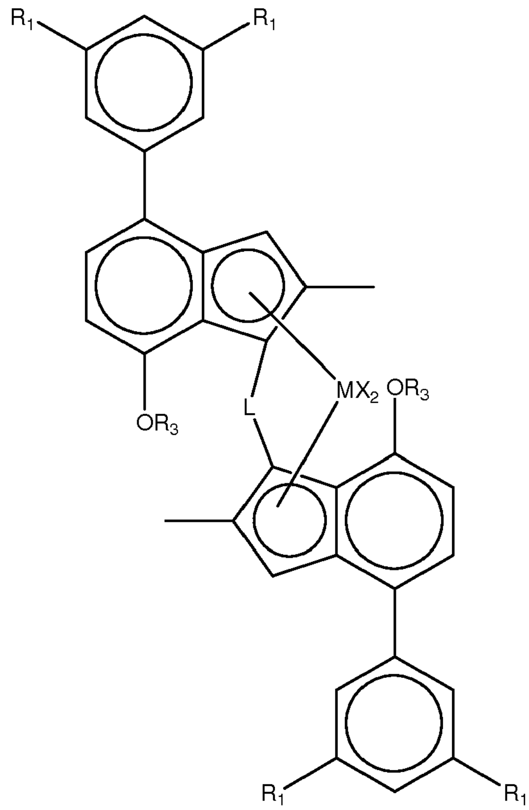

(IV)

wherein L, M and X are as hereinbefore defined (e.g. in formula (III);
$R_1$ is C1-6 alkyl; and
$R_3$ is C1-6 alkyl.

**6.** A catalyst as claimed in any preceding claim where said complex is of formula (V)

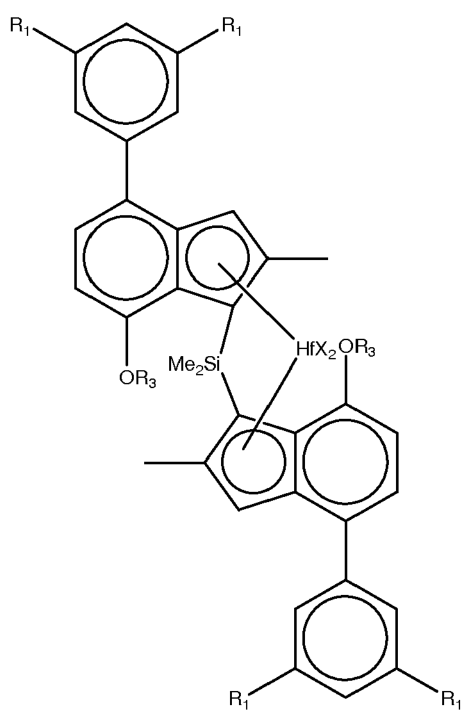

(V)

wherein X is as hereinbefore defined (e.g. halide or methyl);
$R_1$ is C1-6 alkyl; and
$R_3$ is C1-6 alkyl, preferably
1-Zr: rac-$Me_2Si[2\text{-}Me\text{-}4(3,5\text{-}{}^tBu_2Ph)\text{-}7\text{-}OMe\text{-}Ind]_2ZrCl_2$.
1-Hf: rac-$Me_2Si[2\text{-}Me\text{-}4(3,5\text{-}{}^tBu_2Ph)\text{-}7\text{-}OMe\text{-}Ind]_2HfCl_2$.

**7.** A catalyst as claimed in any preceding claim where said cocatalyst is a borate.

**8.** A catalyst as claimed in any preceding claim where said catalyst is free from an external carrier.

**9.** A catalyst as claimed in any preceding claim where said metal M is Hf.

**10.** A complex of formula (I)

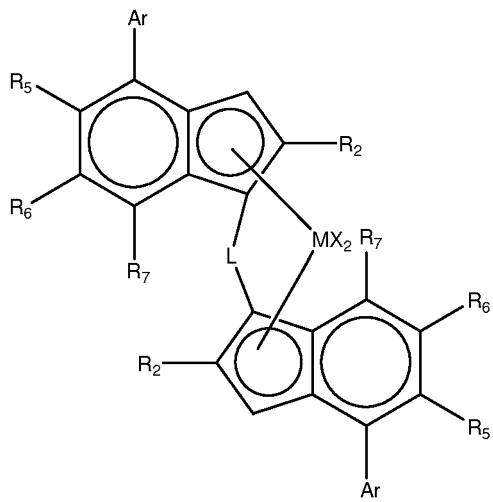

(I)

or a ligand of formula (I')

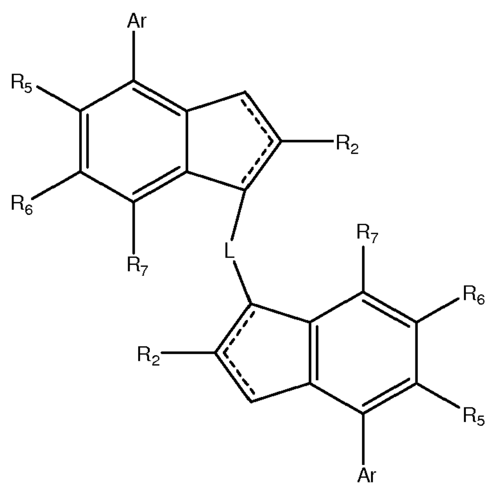

(I')

wherein the dotted line represents a double bond present between C-atoms 1 and 2 or 2 and 3;
M is zirconium or hafnium;
each X is a sigma ligand;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, C1-C20-hydrocarbyl, tri(C1-C20-alkyl)silyl, C6-C20-aryl, C7-C20-arylalkyl or C7-C20-alkylaryl;
each $R_2$ is independently a C1-C20 hydrocarbyl radical optionally containing one or more heteroatoms from groups

14-16;

each $R_5$ is independently hydrogen or an aliphatic C1-20 hydrocarbyl group optionally containing one or more heteroatoms from groups 14-16;

each $R_6$ is independently hydrogen or an aliphatic C1-20 hydrocarbyl group optionally containing one or more heteroatoms from groups 14-16; or

an $R_5$ and $R_6$ group on adjacent carbon atoms can be taken together to form a 5 membered saturated carbon ring which is optionally substituted by a group $R_4$;

each $R_7$ is independently an aliphatic C1-20 hydrocarbyl group optionally containing one or more heteroatoms from groups 14-16 with at least 2 non-H atoms;

each Ar group is independently an aryl or heteroaryl group having up to 20 carbon atoms optionally substituted by one or more groups $R_1$;

each $R_1$ is a C1-20 hydrocarbyl group or two $R_1$ groups on adjacent carbon atoms taken together can form a fused 5 or 6 membered non aromatic ring with the Ar group, said ring being itself optionally substituted with one or more groups $R_4$;

each $R_4$ is a C1-20 hydrocarbyl group.

**11.** A process for the polymerisation of at least one olefin comprising reacting said at least one olefin with a catalyst as claimed in claim 1 to 9, especially for the formation of isotactic polypropylene.

**12.** A process as claimed in claim 11 carried in solution.

**13.** A process for the synthesis of a ligand of formula (I')

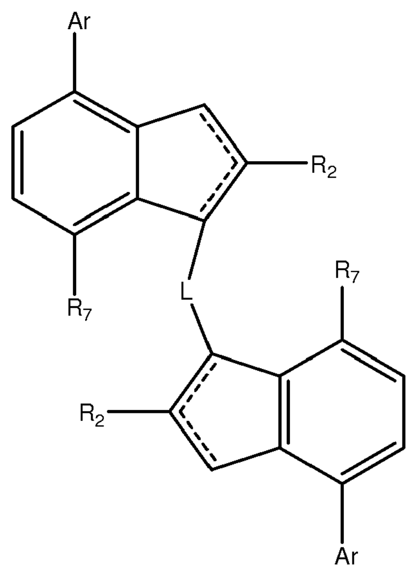

wherein the dotted line represents a double bond present between C-atoms 1 and 2 or 2 and 3;

said process comprising a step in which a compound of formula (VIII)

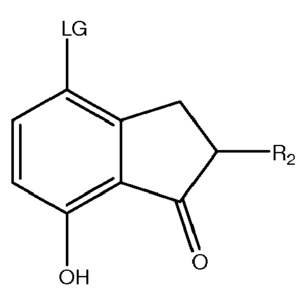

(VIII)

where $R_2$ is as hereinbefore defined and LG is a leaving group, especially a

halide such as bromide; is converted into a compound of formula (IX);

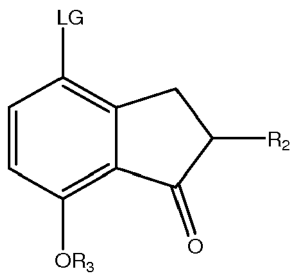

(IX)

where $R_3$ is as hereinbefore defined and said compound (IX) is converted to said compound (I').

**14.** A process for the production of a bridged ligand of formula (VI)

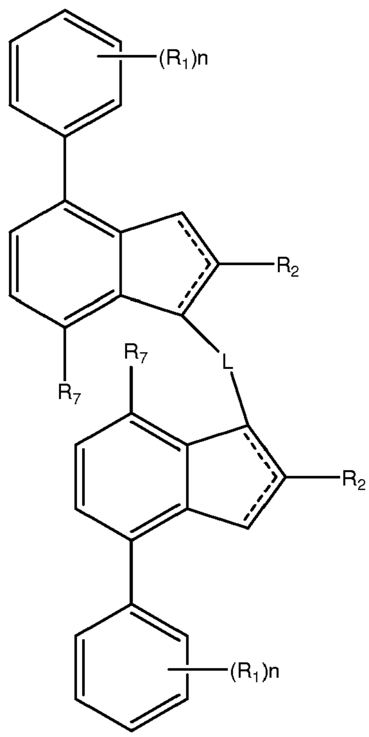

(VI)

wherein the dotted line represents a double bond present between C-atoms 1 and 2 or 2 and 3; comprising reacting a compound of formula (VII)

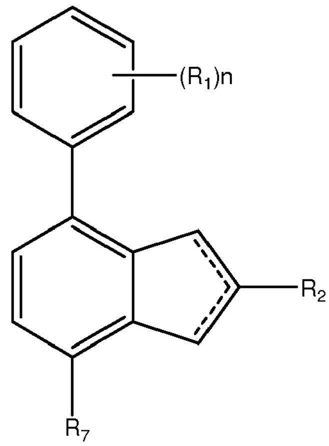

(VII)

wherein the dotted line represents a double bond present between C-atoms 1 and 2 or 2 and 3;
$R_2$ and $R_7$ are as hereinbefore defined, n is 1 to 4 and $R_1$ represents a C3-20 hydrocarbyl group; especially branched C3-20 alkyl group;
first with a base or nucleophile and then with a compound LG-L-LG, where L is as hereinbefore defined and LG represents a leaving group.

**15.** A polypropylene homopolymer having a Mw/Mn of less than 4, a Mw of more than 250,000 and at least 50 wt% of the components thereof have a lamellar thickness of 24 nm or more when measured using SIST; or
a polypropylene homopolymer having a Mw/Mn of less than 4, a Mw of more than 250,000 and at least 50 wt% of the components thereof melt at a temperature of at least 170˚C when measured using SIST (Stepwise Isothermal Segregation Technique).

Figure 1:

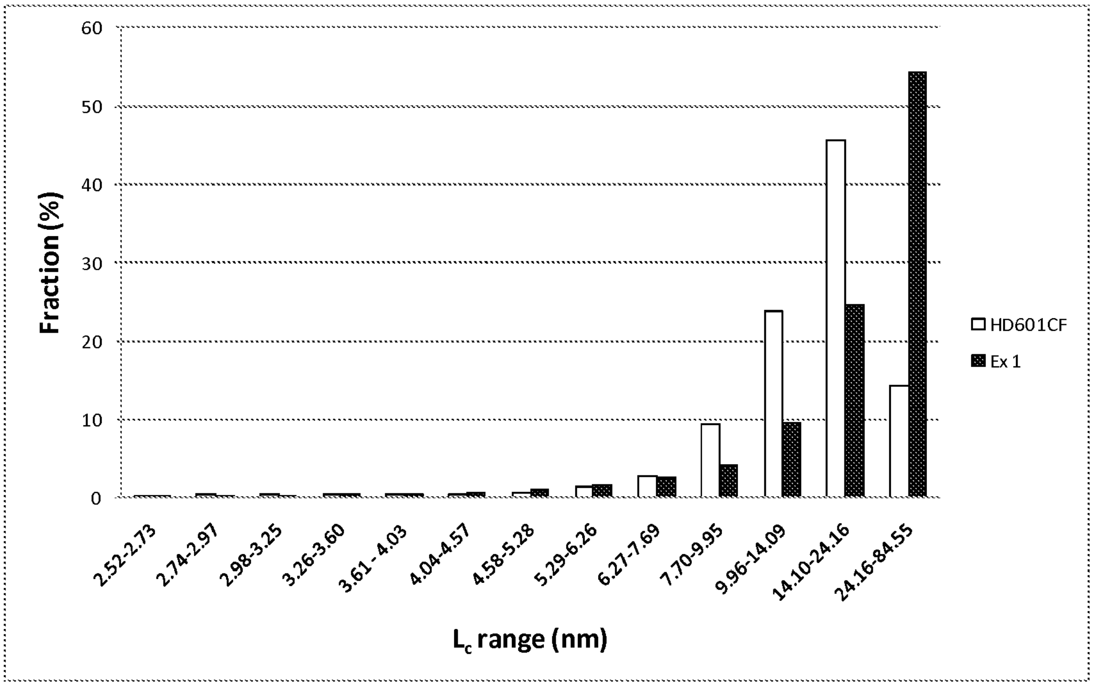
60
50
40
30
20
10
0
Fraction (%)
HD601CF
Ex 1
2.52-2.73
2.74-2.97
2.98-3.25
3.26-3.60
3.61 - 4.03
4.04-4.57
4.58-5.28
5.29-6.26
6.27-7.69
7.70-9.95
9.96-14.09
14.10-24.16
24.16-84.55
Lc range (nm)

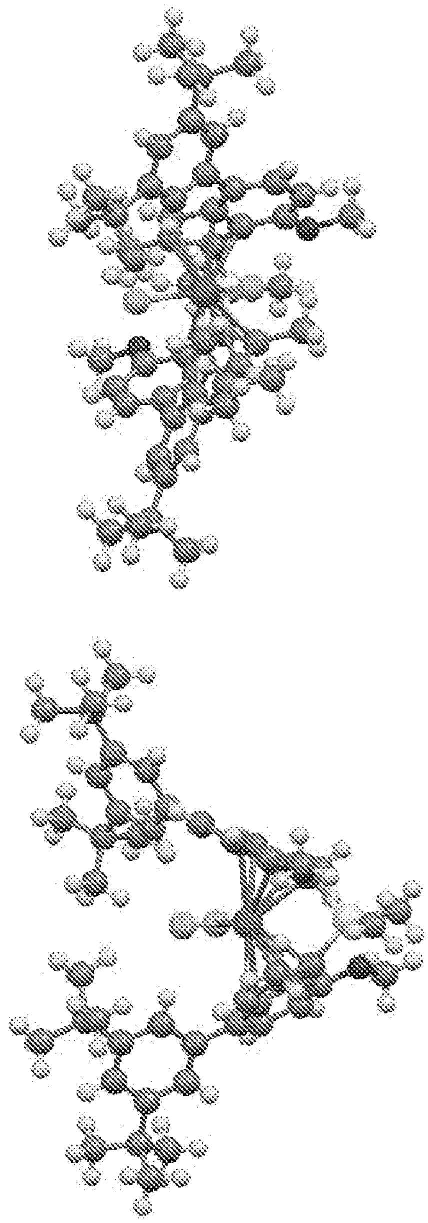

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 200202576 A
- WO 0202575 A
- EP 1209165 A
- US 7405261 B
- WO 2009054831 A
- WO 9414856 A
- WO 9512622 A
- WO 2006097497 A
- WO 03051934 A
- WO 2006069733 A
- WO 2003051934 A


### Non-patent literature cited in the description


- *organometallics,* 1992, vol. 11 (6
- **A. ENDERS ; G. MAAS.** *Chemie in unserer Zeit,* 2000
- **PIERANDREA LO NOSTRO.** Advances in Colloid and Interface Science. Elsevier Science, 1995, vol. 56, 245-287
- **V. BUSICO ; R. CIPULLO.** *Progress in Polymer Science,* 2001, vol. 26, 443-533
- **C. DE ROSA ; F. AURIEMMA ; M. PAOLILLO ; L. RESCONI ; I. CAMURATI.** *Macromolecules,* 2005, vol. 38 (22), 9143-9154
- **COULSON, D. R.** *Inorg. Synth.,* 1972, vol. 13, 121-124
- **CHIEN, J. C. W. ; TSAI, W.-M. ; RAUSCH, M. D.** *J. Am. Chem. Soc.,* 1991, vol. 113, 8570
- *Organometallics,* 2006, vol. 25, 1217